# EUROPÄISCHE PATENTSCHRIFT

(11) **EP 4 670 670 B1**
(45) Veröffentlichungstag und Bekanntmachung des Hinweises auf die Patenterteilung: **18.11.2026**
(21) Anmeldenummer: 24184392.9
(22) Anmeldetag: 25.06.2024
(51) Int. Cl.: A61C 13/00, A61C 13/01

(54) **VERFAHREN ZUM BESTIMMEN EINES INNENAUFBAUS EINER DENTALPROTHESENBASIS MIT WENIGSTENS EINER BLUTGEFÄSSNACHBILDUNG, VERFAHREN ZUR HERSTELLUNG EINER DENTALPROTHESENBASIS, VORRICHTUNG ZUR DATENVERARBEITUNG, COMPUTERPROGRAMM UND COMPUTERLESBARES MEDIUM**
METHOD FOR DETERMINING AN INTERNAL STRUCTURE OF A DENTAL PROSTHESIS BASE WITH AT LEAST ONE BLOOD VESSEL REPRESENTATION, METHOD FOR PRODUCING A DENTAL PROSTHESIS BASE, DEVICE FOR DATA PROCESSING, COMPUTER PROGRAM AND COMPUTER-READABLE MEDIUM
PROCÉDÉ DE DÉTERMINATION DE LA STRUCTURE INTERNE D'UNE BASE DE PROTHÈSE DENTAIRE COMPORTANT AU MOINS UNE REPRÉSENTATION DE VAISSEAU SANGUIN, PROCÉDÉ DE FABRICATION D'UNE BASE DE PROTHÈSE DENTAIRE, DISPOSITIF DE TRAITEMENT DE DONNÉES, PROGRAMME INFORMATIQUE ET SUPPORT LISIBLE PAR ORDINATEUR

(43) Veröffentlichungstag der Anmeldung: 31.12.2025
(73) Patentinhaber: Ivoclar Vivadent AG, 9494 Schaan (LI)
(72) Erfinder: JOHN, Hendrik, 9487 Gamprin (LI); VETSCH, Mathias, 9472 Grabs (CH)
(74) Vertreter: Maiwald GmbH

(56) Entgegenhaltungen:
- US-A1- 2015 056 575
- US-B2- 9 877 642

## Beschreibung

Die Erfindung betrifft ein Verfahren zum Bestimmen eines Innenaufbaus einer Dentalprothesenbasis mit wenigstens einer Blutgefäßnachbildung.

Zudem ist die Erfindung auf ein Verfahren zur Herstellung einer Dentalprothesenbasis mit einer vorgegebenen äußeren Hülle und mit wenigstens einer Blutgefäßnachbildung gerichtet.

Auch betrifft die Erfindung eine Dentalprothesenbasis mit einer äußeren Hülle und einem Innenaufbau.

Ferner ist die Erfindung auf eine Vorrichtung zur Datenverarbeitung, ein Computerprogramm und ein computerlesbares Medium gerichtet.

Dabei wird im Zusammenhang mit der vorliegenden Erfindung unter einer Dentalprothesenbasis derjenige Teil einer Dentalprothese verstanden, der nicht der Nachbildung von Zähnen dient. Die Dentalprothesenbasis bildet folglich im Wesentlichen Zahnfleisch nach. Ersatzzähne einer Dentalprothese gehören nicht zur Dentalprothesenbasis. Die Dentalprothesenbasis kann dabei Bestandteil einer dentalen Totalprothese oder einer dentalen Teilprothese sein.

Im Bereich der Herstellung von Dentalprothesen ist es bekannt, die Dentalprothesenbasis aus Kunststoff herzustellen. Im Sinne einer möglichst originalgetreuen Nachbildung des natürlichen Zahnfleisches kann dabei der Kunststoff, aus dem die Dentalprothesenbasis hergestellt wird, mit einer Farbe eingefärbt werden, die der natürlichen Zahnfleischfarbe entspricht. Um Blutgefäße nachzubilden, die in natürlichem Zahnfleisch vorhanden sind, kann dem Kunststoff, aus dem die Dentalprothesenbasis hergestellt wird, ferner ein Fasermaterial zugesetzt werden, das beispielsweise eine Mehrzahl rötlich gefärbter Fasern umfasst. Die Fasern stellen somit einzeln oder gruppiert eine oder mehrere Blutgefäßnachbildungen dar.

Ferner ist aus der US 9 877 642 B2 eine Vorrichtung zum Ansehen eines Inneren eines Mundes bekannt geworden. Zudem ist aus der US 2015/056575 A1 eine Dentalvorrichtung sowie ein Verfahren zum Verbinden physischer und digitaler Daten zum Zwecke der Diagnose, Behandlung, Planung, Patientenbildung, Kommunikation, Fertigung und des Datentransfers bekannt geworden.

Die Aufgabe der vorliegenden Erfindung liegt nun darin, die Originaltreue einer Dentalprothesenbasis weiter zu verbessern, d. h. ein natürlich wirkendes Erscheinungsbild der Dentalprothesenbasis zu erreichen. Mit anderen Worten soll eine Möglichkeit geschaffen werden, eine Dentalprothesenbasis herzustellen, deren Erscheinungsbild natürlichem Zahnfleisch möglichst nahekommt.

Die Aufgabe wird durch ein Verfahren zum Bestimmen eines Innenaufbaus einer Dentalprothesenbasis mit wenigstens einer Blutgefäßnachbildung gelöst. Das Verfahren umfasst:
- Erhalten von Außenhülledaten, die eine äußere Hülle der Dentalprothesenbasis beschreiben,
- Erhalten von Blutgefäßdaten, die wenigstens eine Blutgefäßnachbildung beschreiben, und
- Kombinieren der Außenhülledaten und der Blutgefäßdaten zu Innenaufbaudaten, wobei die Innenaufbaudaten eine Anordnung der wenigstens einen Blutgefäßnachbildung innerhalb der äußeren Hülle der Dentalprothesenbasis beschreiben.

Dieses Verfahren basiert auf der Idee, ein möglichst naturgetreues Erscheinungsbild einer Dentalprothesenbasis nicht nur durch eine möglichst naturgetreue äußere Hülle zu erreichen, sondern auch den Innenaufbau der Dentalprothesenbasis im Sinne eines möglichst naturgetreuen Erscheinungsbilds zu nutzen. Neben der naturgetreuen Nachbildung der äußeren Hülle soll gemäß der vorliegenden Erfindung also auch ein Innenaufbau der Dentalprothesenbasis derart gewählt werden, dass die Originaltreue der Dentalprothesenbasis insgesamt erhöht wird. Hierfür ist grundlegend, dass eine Dentalprothesenbasis üblicherweise zumindest abschnittsweise transparent oder transluzent ist. Daher kann der Innenaufbau zum äußeren Erscheinungsbild beitragen. In diesem Zusammenhang beschreiben die Außenhülledaten die äußere Hülle der Dentalprothesenbasis bevorzugt im virtuellen Raum. Die Blutgefäßdaten beschreiben die wenigstens eine Blutgefäßnachbildung mittelbar oder unmittelbar und bevorzugt ebenfalls im virtuellen Raum. Dabei beschreiben die Blutgefäßdaten zumindest eine äußere Form zumindest einer Blutgefäßnachbildung. Das kann direkt erfolgen, d. h. die Blutgefäßdaten können eine konkrete Beschreibung der äußeren Form der zumindest einen Blutgefäßnachbildung umfassen. Bevorzugt ist dabei die äußere Form in drei räumlichen Dimensionen beschrieben. Alternativ können die Blutgefäßdaten die Blutgefäßnachbildung indirekt beschreiben. In diesem Zusammenhang können die Blutgefäßdaten einen Satz an Schicht-Daten umfassen, wobei jedes Element des Satzes an Schicht-Daten einen ebenen Schnitt der Blutgefäßnachbildung beschreibt. Insgesamt, d. h. zusammengenommen, beschreiben alle Elemente des Satzes an Schicht-Daten ebenfalls eine äußere Form der Blutgefäßnachbildung. Eine weitere Alternative einer indirekten Beschreibung einer äußeren Form wenigstens einer Blutgefäßnachbildung besteht darin, Parameter dieser Form anzugeben. Für den vereinfachten Fall, dass eine Blutgefäßnachbildung die Form eines Kreiszylinders aufweisen soll, können die Blutgefäßdaten beispielsweise einen Durchmesser und eine Höhe dieses Kreiszylinders beschreiben. In allen genannten Alternativen ist also eine äußere Form zumindest einer Blutgefäßnachbildung datenmäßig beschrieben. Somit können die Außenhülledaten und die Blutgefäßdaten vorzugsweise im virtuellen Raum zu Innenaufbaudaten kombiniert werden. Wie bereits erwähnt, umfassen die Innenaufbaudaten eine Beschreibung der wenigstens einen Blutgefäßnachbildung im Inneren der äußeren Hülle der Dentalprothesenbasis. Mit anderen Worten beschreiben die Innenaufbaudaten eine Dentalprothesenbasis, die eine Blutgefäßnachbildung aufweist, welche innerhalb der äußeren Hülle liegt. Nachdem auch natürliches Zahnfleisch Blutgefäße umfasst, lässt sich mittels des erfindungsgemäßen Verfahrens also ein Innenaufbau der Dentalprothesenbasis bestimmen, der zu einem äußerst naturgetreuen Erscheinungsbild führt. Gleichzeitig ist das erfindungsgemäße Verfahren vergleichsweise einfach und lässt sich insbesondere innerhalb einer CAD-Software oder innerhalb einer CAM-Software leicht umsetzen.

Im Zusammenhang mit der vorliegenden Erfindung können die Außenhülledaten patientenindividuell ermittelt werden. Beispielsweise basieren die Außenhülledaten auf Scandaten, die eine Mundsituation, d.h. ein Inneres des Mundes des Patienten, beschreiben. Derartige Scandaten können mittels eines Intraoralscanners generiert werden. Auf Basis derartiger Scandaten können die Außenhülledaten innerhalb der dentalen CAD-Software modelliert und, sofern nötig oder gewünscht, in der dentalen CAM-Software angepasst werden. Die Außenhülledaten beschreiben dabei die äußere Hülle der Dentalprothesenbasis im virtuellen Raum.

Es versteht sich, dass die Außenhülledaten durch die Beschreibung der äußeren Hülle der Dentalprothesenbasis zumindest indirekt auch ein Volumen der Dentalprothesenbasis beschreiben, welches von der äußeren Hülle begrenzt ist. Dabei stellt das Beschreiben einer Begrenzung eines Volumens eine datentechnisch effiziente Weise dar, ein Volumen zu beschreiben.

Das erfindungsgemäße Verfahren wird insbesondere automatisiert, teilautomatisiert und/oder computergestützt ausgeführt. Das bedeutet, dass sich der Innenaufbau im Wesentlichen ohne menschliches Zutun bestimmen lässt. Das erfindungsgemäße Verfahren zum Bestimmen eines Innenaufbaus einer Dentalprothesenbasis kann somit ein computerimplementiertes Verfahren sein.

Es versteht sich, dass das erfindungsgemäße Verfahren sowohl für dentale Teilprothesen als auch für dentale Totalprothesen genutzt werden kann, die eine Dentalprothesenbasis umfassen.

Gemäß einer Ausführungsform umfasst das Kombinieren der Außenhülledaten und der Blutgefäßdaten zu Innenaufbaudaten eine boolesche Operation. Das bedeutet, dass die Außenhülledaten und die Blutgefäßdaten unter Nutzung wenigstens einer booleschen Operation kombiniert werden. Alternativ oder zusätzlich umfasst das Kombinieren der Außenhülledaten und der Blutgefäßdaten zu Innenaufbaudaten ein ausschließliches Anwenden der Blutgefäßdaten innerhalb der von den Außenhülledaten beschriebenen äußeren Hülle der Dentalprothesenbasis. Wie bereits erwähnt, beschreiben die Blutgefäßdaten wenigstens eine Blutgefäßnachbildung. Alternativ können die Blutgefäßdaten eine Mehrzahl an Blutgefäßnachbildungen beschreiben, die vorzugsweise in einem dreidimensionalen Raum angeordnet sind. Mit anderen Worten beschreiben die Blutgefäßdaten eine Mehrzahl an Blutgefäßnachbildungen, die innerhalb eines Volumens angeordnet sind. Vorzugsweise sind dabei Zwischenräume zwischen den einzelnen Blutgefäßnachbildungen Leerräume. In einem solchen Fall kann das Kombinieren mittels einer booleschen Operation in mehreren Schritten erfolgen. In einem ersten Schritt können dabei diejenigen Elemente der Blutgefäßdaten eliminiert oder ignoriert werden, die Blutgefäßnachbildungen oder Abschnitte von Blutgefäßnachbildungen beschreiben, die außerhalb der äußeren Hülle liegen würden. Das bedeutet, dass die von den Außenhülledaten beschriebene äußere Hülle virtuell innerhalb desjenigen Volumens platziert wird, innerhalb dem die Blutgefäßnachbildungen angeordnet sind. Sodann kann dieses Volumen in zwei Teil-Volumina getrennt werden, wobei ein Teil-Volumen innerhalb der äußeren Hülle liegt und ein anderes Teil-Volumen außerhalb der äußeren Hülle. Im Ergebnis dieses Schritts werden also reduzierte Blutgefäßdaten erhalten. In einem weiteren Schritt können dann die reduzierten Blutgefäßdaten von den Außenhülledaten, d.h. vom mittels der äußeren Hülle begrenzten Volumen, subtrahiert werden. Das hat zur Folge, dass das von der äußeren Hülle begrenzte Volumen überall dort Leerräume aufweist, wo später Blutgefäßnachbildungen angeordnet sein sollen. Diese Daten können als reduzierte Außenhülledaten bezeichnet werden. In einem nachfolgenden Schritt können dann die reduzierten Blutgefäßdaten und die reduzierten Außenhülledaten vereinigt werden, um die Innenaufbaudaten zu generieren. Auf diese Weise wird sichergestellt, dass die Innenaufbaudaten lediglich Blutgefäßnachbildungen im Inneren der äußeren Hülle beschreiben. Gleichzeitig wird sichergestellt, dass für jeden Punkt oder Voxel des Innenaufbaus der Dentalprothesenbasis eindeutig festgelegt ist, ob er zu einer Blutgefäßnachbildung gehört oder zu einem Abschnitt der Dentalprothesenbasis, der einen Zahnfleischabschnitt nachbildet, welcher keine Blutgefäßnachbildung darstellt. Somit lassen sich einfach und zuverlässig Innenaufbaudaten erzeugen, die Blutgefäßnachbildungen innerhalb der äußeren Hülle beschreiben. Ferner lässt sich das Erzeugen der Innenaufbaudaten einfach automatisieren und somit beispielsweise mittels eines CAD-Systems und/oder eines CAM-Systems ausführen.

In einem anderen Fall, in dem das Kombinieren mittels einer booleschen Operation erfolgt, werden ebenfalls in einem ersten Schritt diejenigen Elemente der Blutgefäßdaten eliminiert oder ignoriert, die Blutgefäßnachbildungen oder Abschnitte von Blutgefäßnachbildungen beschreiben, die außerhalb der äußeren Hülle liegen würden. Dabei können die Blutgefäßdaten wieder eine Mehrzahl an Blutgefäßnachbildungen beschreiben, die innerhalb eines Volumens angeordnet sind. Vorzugsweise sind dabei wieder Zwischenräume zwischen den einzelnen Blutgefäßnachbildungen Leerräume. Das bedeutet, dass im ersten Schritt die von den Außenhülledaten beschriebene äußere Hülle virtuell innerhalb desjenigen Volumens platziert wird, innerhalb dem die Blutgefäßnachbildungen angeordnet sind. Sodann kann dieses Volumen in zwei Teil-Volumina getrennt werden, wobei ein Teil-Volumen innerhalb der äußeren Hülle liegt und ein anderes Teil-Volumen außerhalb der äußeren Hülle. Im Ergebnis dieses Teil-Schritts werden also reduzierte Blutgefäßdaten erhalten. Der Innenaufbau ist dann durch die reduzierten Blutgefäßdaten und das mittels der Außenhülledaten beschriebene Volumen gemeinsam definiert. Das bedeutet, dass die Innenaufbaudaten eine Kombination der reduzierten Blutgefäßdaten und der Außenhülledaten umfassen. In dieser Variante überlappen allerdings die von den reduzierten Blutgefäßdaten beschriebenen Blutgefäßnachbildungen das von den Außenhülledaten beschriebene Volumen. Daher umfassen die Innenaufbaudaten in diesem Fall auch Priorisierungsdaten, die eine Priorisierung derjenigen Subvolumina, die der Blutgefäßnachbildung dienen und daher von den reduzierten Blutgefäßdaten beschrieben sind, gegenüber denjenigen Subvolumina beschreiben, die der Nachbildung des übrigen Zahnfleischs dienen. Das bedeutet, dass ein Punkt oder Voxel des Innenaufbaus, welcher sowohl einer Blutgefäßnachbildung zugeordnet ist, d.h. von den reduzierten Blutgefäßdaten beschrieben wird, als auch Bestandteil des von den Außenhülledaten beschriebenen Volumens ist, mittels der Priorisierungsdaten eindeutig als Bestandteil einer Blutgefäßnachbildung definiert ist. Es ist also auch in dieser Variante sichergestellt, dass für jeden Punkt des Innenaufbaus der Dentalprothesenbasis eindeutig festgelegt ist, ob er zu einer Blutgefäßnachbildung gehört oder zu einem Abschnitt der Dentalprothesenbasis, der einen Zahnfleischabschnitt nachbildet, welcher keine Blutgefäße umfasst. Somit lassen sich einfach und zuverlässig Innenaufbaudaten erzeugen, die Blutgefäßnachbildungen innerhalb der äußeren Hülle beschreiben. Ferner lässt sich das Erzeugen der Innenaufbaudaten einfach automatisieren und somit beispielsweise mittels eines CAD-Systems und/oder eines CAM-Systems ausführen.

Die Alternative, in der die Blutgefäßdaten ausschließlich innerhalb der von den Außenhülledaten beschriebenen äußeren Hülle der Dentalprothesenbasis angewendet werden, kann vereinfacht dahingehend beschrieben werden, dass das Innere der äußeren Hülle im Zuge der Kombination der Außenhülledaten und der Blutgefäßdaten mit Blutgefäßnachbildungen befüllt wird. Das erfolgt virtuell, d.h. rein durch Datenverarbeitung. In dieser Alternative werden also die Blutgefäßnachbildungen, die von den Blutgefäßdaten beschrieben werden, direkt ausschließlich im Inneren der äußeren Hülle angeordnet. Zu diesem Zweck kann für jede Blutgefäßnachbildung ein Ankerpunkt im Inneren der äußeren Hülle definiert werden. Es kann dann jedem Ankerpunkt eine Blutgefäßnachbildung zugeordnet werden und relativ zum Ankerpunkt im Inneren der äußeren Hülle positioniert werden. In einem ersten Beispiel werden die Ankerpunkte mittels eines regelmäßigen, dreidimensionalen Rasters bestimmt. In einem zweiten Beispiel werden die Ankerpunkte mittels eines unregelmäßigen, dreidimensionalen Rasters bestimmt. In einem dritten Beispiel werden die Ankerpunkte zufällig im Inneren der äußeren Hülle angeordnet. Dabei können die Blutgefäßnachbildungen für alle Ankerpunkte gleich oder unterschiedlich sein, wie später noch im Detail erläutert werden wird. Gemäß beider Alternativen lassen sich einfach und zuverlässig Innenaufbaudaten erzeugen, die Blutgefäßnachbildungen innerhalb der äußeren Hülle beschreiben. Ferner lassen sich beide Alternativen einfach automatisieren und somit beispielsweise mittels eines CAD-Systems und/oder eines CAM-Systems ausführen.

Die Blutgefäßdaten können wenigstens einen Geometrieparameter umfassen, welcher eine Geometrie der Blutgefäßnachbildung beschreibt. Alternativ oder zusätzlich können die Blutgefäßdaten wenigstens einen Verfahrensparameter umfassen, welcher ein Vorgehen zum Erstellen der Blutgefäßnachbildung beschreibt. Für den Fall, dass die Blutgefäßdaten wenigstens einen Geometrieparameter umfassen, können die Blutgefäßdaten vereinfacht auch als Template oder Vorlage bezeichnet werden. In diesem Fall geht es also bei der Kombination der Außenhülledaten und der Blutgefäßdaten lediglich darum, die wenigstens eine Blutgefäßnachbildung, die dem von den Blutgefäßdaten beschriebenen Template entspricht, im Inneren der äußeren Hülle zu positionieren, die von den Außenhülledaten beschrieben wird. Für den Fall, dass die Blutgefäßdaten wenigstens einen Verfahrensparameter umfassen, umfassen die Blutgefäßdaten eine Vorschrift oder ein Regelwerk, dessen Abarbeitung zu einer Beschreibung der wenigstens einen Blutgefäßnachbildung führt. Beispielsweise können in diesem Zusammenhang Verfahrensparameter von den Blutgefäßdaten umfasst sein, die ein Extrusionsverfahren beschreiben. Dieses läuft bevorzugt virtuell ab. Eine Blutgefäßnachbildungen kann dabei beispielsweise dadurch beschrieben werden, dass ein Querschnitt vorgegeben wird, der entlang eines vorgegebenen Pfads extrudiert werden soll. Zudem kann eine Länge für die Extrusion vorgegeben sein. In diesem Zusammenhang kann der Pfad eine oder mehrere Krümmungen aufweisen. Es versteht sich, dass ein solches Extrusionsverfahren auch für mehrere Startpunkte innerhalb der von den Außenhülledaten beschriebenen äußeren Hülle ausgeführt werden kann. Dabei können zudem Randbedingungen vorgegebenen sein, die beispielsweise Mindestabstände zwischen den mehreren Startpunkten betreffen. Insgesamt lassen sich auf diese Weise Blutgefäßnachbildungen präzise und zuverlässig beschreiben.

Gemäß einer Variante ist die wenigstens eine Blutgefäßnachbildung als ein nach Art einer Extrusion entlang eines Pfads geführter Querschnitt beschrieben. Dies lässt sich sowohl mit der Variante kombinieren, in der die Blutgefäßdaten wenigstens einen Geometrieparameter umfassen, als auch mit der Variante, in der die Blutgefäßdaten wenigstens einen Verfahrensparameter umfassen. In beiden Fällen lässt sich die Blutgefäßnachbildung in einfacher und effizienter Weise beschreiben.

Die Blutgefäßdaten können eine Mehrzahl an Blutgefäßnachbildungen beschreiben. Die Blutgefäßnachbildungen können dabei in drei Dimensionen verteilt angeordnet sein. Vorzugsweise sind dabei auch die einzelnen Blutgefäßnachbildungen in drei Dimensionen beschrieben. Ferner kann die Verteilung in drei Dimensionen entsprechend mindestens einer Regel erfolgen. In einem solchen Fall kann man auch von einem Muster, genauer von einem 3D-Muster, sprechen. Beispielsweise können mehrere oder alle der Mehrzahl an Blutgefäßnachbildungen für sich genommen identisch sein. In diesem Fall stellen die einzelnen Blutgefäßnachbildungen also Duplikate dar, die in drei Dimensionen verteilt angeordnet sind. Optional kann dabei eine räumliche Orientierung der Duplikate variiert werden. Alternativ ist es auch möglich, dass jede Blutgefäßnachbildung der Mehrzahl an Blutgefäßnachbildungen unterschiedlich ist. Ebenfalls sind Mischformen möglich. In diesem Zusammenhang können mittels der Blutgefäßdaten zwei oder mehr Gruppen an Blutgefäßnachbildungen beschrieben werden, wobei die Blutgefäßnachbildungen, die zur selben Gruppe gehören, für sich genommen identisch sind. Blutgefäßnachbildungen, die zu unterschiedlichen Gruppen gehören, unterscheiden sich jedoch in ihrer Geometrie. Auch ist es möglich, unterschiedliche Blutgefäßnachbildungen durch Variation eines oder mehrere Geometrieparameter zu erstellen. Beispielsweise kann in diesem Zusammenhang eine Skalierung und/oder eine Länge der Blutgefäßnachbildungen variiert werden. Die Verteilung der Blutgefäßnachbildungen kann auch ein Zufallselement umfassen. Mit anderen Worten kann die Verteilung der Blutgefäßnachbildungen in drei Dimensionen zufällig sein. Insgesamt ergibt sich ein naturgetreues Erscheinungsbild und eine naturgetreue Verteilung der Blutgefäßnachbildungen.

In einem Beispiel wird zur räumlichen Verteilung der Blutgefäßnachbildungen ein sogenanntes Poisson Disk Sampling verwendet. Bei einem solchen Verfahren werden die Blutgefäßnachbildungen im virtuellen dreidimensionalen Raum zufällig angeordnet, wobei jedoch ein vorgegebener Mindestabstand eingehalten wird. Vorliegend beträgt der Mindestabstand 3mm bis 10 mm. Vorzugsweise beträgt der Mindestabstand 4mm, 5mm oder 6mm.

In einem Beispiel umfasst das Verfahren ferner:
- Erhalten einer Dichteinformation, welche eine räumliche Packungsdichte der Blutgefäßnachbildungen beschreibt, und
- Kombinieren der Dichteinformation und der Blutgefäßdaten, sodass die Mehrzahl an Blutgefäßnachbildungen mit der räumlichen Packungsdichte in drei Dimensionen verteilt angeordnet sind.

Auf diese Weise lassen sich eine Mehrzahl an Blutgefäßnachbildungen schnell und einfach anordnen. Ferner kann mittels der Dichteinformation die räumliche Anordnung der Blutgefäßnachbildungen derart beeinflusst werden, dass sich insgesamt ein natürliches Erscheinungsbild der Dentalprothesenbasis ergibt. Es versteht sich, dass dabei die Dichteinformation festgelegt sein kann. Alternativ kann die Dichteinformation variabel sein, d.h. für verschiedene Innenaufbaudaten, die beispielsweise für verschiedene Dentalprothesenbasen verwendet werden, können unterschiedliche Dichteinformationen verwendet werden.

Gemäß eines Ausführungsbeispiels umfasst das Verfahren ferner ein Erhalten einer Skalierungsinformation und Skalieren wenigstens einer Abmessung der wenigstens einen, von den Blutgefäßdaten beschriebenen Blutgefäßnachbildung basierend auf der Skalierungsinformation. Mit anderen Worten beschreibt die Skalierungsinformation eine Größe oder Ausdehnung einer Blutgefäßnachbildung, die wenigstens eine Abmessung oder Dimension der Blutgefäßnachbildung betrifft. Mittels der Skalierungsinformation kann somit eine Größe der Blutgefäßnachbildung an die relevante Dentalprothesenbasis angepasst werden. Somit kann eine naturgetreue Nachbildung eines Blutgefäßes erreicht werden. Ferner kann die Skalierungsinformation verwendet werden, um in einem Fall, in dem eine Mehrzahl an Blutgefäßnachbildungen vorgesehen ist, diese Blutgefäßnachbildungen zu variieren. Auch auf diese Weise können originalgetreue Blutgefäßnachbildungen geschaffen werden.

Im Zusammenhang mit der erhaltenen Skalierungsinformation ist es möglich, alle Abmessungen einer Blutgefäßnachbildung gleichermaßen zu skalieren. Dies entspricht einer Vergrößerung oder Verkleinerung. Alternativ ist es möglich, weniger als alle Abmessungen zu skalieren, z. B. lediglich eine Abmessung. Das führt zu einer Verzerrung der Blutgefäßnachbildung, z. B. zu einer Stauchung oder Streckung. Es versteht sich, dass in einem Fall, in dem eine Mehrzahl an Blutgefäßnachbildungen vorgesehen ist, die vorgenannten Alternativen auch kombiniert werden können, d.h. wenigstens eine Blutgefäßnachbildung kann durch eine Vergrößerung oder Verkleinerung einer anderen Blutgefäßnachbildung oder einer Vorlage generiert werden. Zudem kann wenigstens eine Blutgefäßnahbildung durch eine Verzerrung einer anderen Blutgefäßnachbildung oder einer Vorlage generiert werden. Insgesamt lassen sich so eine Mehrzahl an Blutgefäßnachbildungen erstellen, die im Ergebnis unterschiedlich geformt sind, aber auf lediglich einer oder wenigen Blutgefäßnachbildungen basieren, wobei die letztgenannte Blutgefäßnachbildung als Template oder Vorlage bezeichnet werden kann. Dies ist somit datentechnisch effizient und führt gleichzeitig zu einem naturgetreuen Erscheinungsbild der Dentalprothesenbasis.

Das Verfahren kann ferner umfassen:
- Zuordnen einer Farbinformation zu der wenigstens einen, von den Blutgefäßdaten beschriebenen Blutgefäßnachbildung und/oder
- Zuordnen einer Farbhelligkeitsinformation zu der wenigstens einen, von den Blutgefäßdaten beschriebenen Blutgefäßnachbildung, und/oder
- Zuordnen einer Materialinformation zu der wenigstens einen, von den Blutgefäßdaten beschriebenen Blutgefäßnachbildung und/oder
- Zuordnen einer Transluzenzinformation zu der wenigstens einen, von den Blutgefäßdaten beschriebenen Blutgefäßnachbildung.

Das bedeutet, dass der wenigstens einen Blutgefäßnachbildung eine Farbinformation und/oder eine Farbhelligkeitsinformation und/oder eine Materialinformation und/oder eine Transluzenzinformation zugeordnet werden kann. Für den Fall, dass eine Mehrzahl an Blutgefäßnachbildungen vorhanden ist, kann jeder Blutgefäßnachbildung eine Farbinformation und/oder eine Farbhelligkeitsinformation und/oder eine Materialinformation und/oder eine Transluzenzinformation zugeordnet werden. Dabei können die Farbinformation und/oder die Farbhelligkeitsinformation und/oder die Materialinformation und/oder die Transluzenzinformation für alle Blutgefäßnachbildungen gleich sein. Alternativ unterscheiden sich die Farbinformation und/oder die Farbhelligkeitsinformation und/oder die Materialinformation und/oder die Transluzenzinformation für jede Blutgefäßnachbildung. Gemäß einer anderen Alternative weisen Gruppen an Blutgefäßnachbildungen dieselbe Farbinformation und/oder Farbhelligkeitsinformation und/oder Materialinformation und/oder Transluzenzinformation auf, wobei verschiedenen Gruppen unterschiedliche Farbinformationen und/oder unterschiedliche Farbhelligkeitsinformationen und/oder unterschiedliche Materialinformationen und/oder unterschiedliche Transluzenzinformationen zugeordnet sind. Auf diese Weise wird der Innenaufbau der Dentalprothesenbasis näher definiert. Die Zuordnung der Materialinformation und/oder Farbinformation und/oder Farbhelligkeitsinformation und/oder Transluzenzinformation bewirkt dabei ein naturgetreues Erscheinungsbild der Dentalprothesenbasis. Insgesamt lässt sich auf diese Weise ein Innenaufbau der Dentalprothesenbasis im Detail definieren, sodass die Dentalprothesenbasis ein naturgetreues Erscheinungsbild aufweist. Es versteht sich dabei, dass sich die Blutgefäßnachbildung hinsichtlich der Farbinformation, d.h. hinsichtlich der Farbe, und/oder der Farbhelligkeitsinformation, d.h. der Helligkeit der Farbe, und/oder hinsichtlich der Materialinformation, d.h. hinsichtlich des verwendeten Materials, und/oder hinsichtlich der Transluzenzinformation, d.h. hinsichtlich der Transluzenz, von den übrigen Abschnitten der Dentalprothesenbasis, d.h. von denjenigen Abschnitten der Dentalprothesenbasis, die keine Blutgefäßnachbildungen sind, unterscheidet.

Beispielsweise betrifft vorliegend die Farbinformation einen Farbwert in einem Lab-Farbmodell. Die Farbhelligkeitsinformation betrifft dann einen Helligkeitswert im Lab-Farbmodell.

Es wird ferner darauf hingewiesen, dass der Begriff Transluzenz reziprok für den Begriff Opazität steht und vorliegend der Einfachheit halber überwiegend der Begriff Transluzenz verwendet wird.

Vorzugsweise wird dabei der wenigstens einen, von den Blutgefäßdaten beschriebenen Blutgefäßnachbildung mittels der Farbinformation und/oder mittels der Farbhelligkeitsinformation eine Farbe zugeordnet, die innerhalb des Farbbereichs, der für die Dentalprothesenbasis verwendet wird, die dunkelste Farbe ist. Auf diese Weise ergibt sich ein besonders natürliches äußeres Erscheinungsbild der Dentalprothesenbasis.

Vorzugsweise wird dabei der wenigstens einen, von den Blutgefäßdaten beschriebenen Blutgefäßnachbildung mittels der Transluzenzinformation eine Transluzenz zugeordnet, die innerhalb des Transluzenzbereichs, der für die Dentalprothesenbasis verwendet wird, die geringste Transluzenz ist. Mit anderen Worten wird der wenigstens einen Blutgefäßnachbildung die höchste verfügbare Opazität zugeordnet. Auf diese Weise ergibt sich ein besonders natürliches äußeres Erscheinungsbild der Dentalprothesenbasis.

Auch ist es möglich, dass das Verfahren zusätzlich umfasst:
- Erhalten von Sperrdaten, die wenigstens einen blutgefäßfreien Abschnitt innerhalb der äußeren Hülle der Dentalprothesenbasis beschreiben, und
- Kombinieren der Außenhülledaten und der Blutgefäßdaten zu Innenaufbaudaten für Abschnitte innerhalb der äußeren Hülle der Dentalprothesenbasis und außerhalb des von den Sperrdaten beschriebenen wenigstens einen blutgefäßfreien Abschnitts.

Mittels der Sperrdaten lassen sich also Bereiche der Dentalprothesenbasis beschreiben, in denen keine Blutgefäßnachbildungen vorgesehen werden sollen. Auf diese Weise lässt sich ein besonders natürliches Erscheinungsbild der Dentalprothesenbasis erzeugen, da auch natürliches Zahnfleisch Abschnitte aufweist, in dem keine Blutgefäße vorhanden sind. Dies lässt sich unter Nutzung der Sperrdaten imitieren. Beispielsweise kann so ein Abschnitt an einer Oberfläche der Dentalprothesenbasis frei von Blutgefäßnachbildungen gehalten werden. Beispielsweise kann in einer an die Oberfläche der Dentalprothesenbasis angrenzenden Schicht keine Blutgefäßnachbildung vorgesehen werden. Diese Schicht hat beispielsweise eine Dicke von 250 µm oder weniger, insbesondere von 200 µm oder weniger. Eine solche Schicht stellt eine naturgetreue Nachbildung einer auf natürlichem Zahnfleisch vorhanden Schleimhaut dar, die üblicherweise keine Blutgefäße umfasst.

Gemäß einer Ausführungsform umfasst das Verfahren ferner:
- Erhalten von Subvolumendaten, welche einen Abschnitt eines Inneren der von den Außenhülledaten beschriebenen äußeren Hülle der Dentalprothesenbasis beschreiben,
- Kombinieren der Außenhülledaten, der Subvolumendaten und der Blutgefäßdaten zu Innenaufbaudaten, wobei die Innenaufbaudaten eine Anordnung der wenigstens einen Blutgefäßnachbildung innerhalb des von den Subvolumendaten beschriebenen Abschnitts des Inneren der äußeren Hülle der Dentalprothesenbasis beschreiben.

Auf diese Weise lassen sich also Blutgefäßnachbildungen definieren, die auf den von den Subvolumendaten beschriebenen Abschnitt eines Inneren der Außenhülle beschränkt sind. Die wenigstens eine Blutgefäßnachbildung kann also lokal begrenzt vorgesehen werden. Darüber hinaus kann das vorliegende Verfahren mehrfach für eine Dentalprothesenbasis ausgeführt werden, wobei für jede Ausführung des Verfahrens andere Subvolumendaten verwendet, also jede Ausführung einen anderen Abschnitt eines Inneren der Außenhülle betrifft. Somit lassen sich Blutgefäßnachbildungen unterschiedlicher Art für unterschiedliche Subvolumina definieren. Dies trägt der Tatsache Rechnung, dass auch bei natürlichem Zahnfleisch die Blutgefäße in verschiedenen Subvolumina unterschiedlich ausgebildet sind, z. B. sogenanntes free Gingiva und attached Gingiva. Somit wird ein naturgetreues Erscheinungsbild der Dentalprothesenbasis erreicht.

Das Erhalten von Blutgefäßdaten kann ein Auswählen der Blutgefäßdaten aus einer Mehrzahl an Blutgefäßdatenalternativen umfassen, wobei jede der Blutgefäßdatenalternativen wenigstens eine Blutgefäßnachbildung beschreibt. In diesem Zusammenhang können die Blutgefäßdatenalternativen in Form einer Bibliothek bereitgestellt werden. Auf diese Weise lässt sich eine Mehrzahl an Blutgefäßdatenalternativen einfach und zuverlässig bereitstellen. Dabei unterscheiden sich die von den Blutgefäßdatenalternativen beschriebenen Blutgefäßnachbildungen. Das Verwenden unterschiedlicher Blutgefäßnachbildungen führt zu einem besonders naturgetreuen Erscheinungsbild der Dentalprothesenbasis. Dabei können die unterschiedlichen Blutgefäßnachbildungen von einem Nutzer ausgewählt werden. Alternativ ist es möglich, die Blutgefäßdatenalternativen und damit die unterschiedlichen Blutgefäßnachbildungen unter Nutzung einer Zufallskomponente auszuwählen. Es können dabei Blutgefäßdatenalternativen aus allen Blutgefäßdaten oder aus einer Teilmenge der verfügbaren Blutgefäßdatenalternativen verwendet werden. Wie bereits erläutert, umfasst jede Blutgefäßdatenalternative eine Beschreibung einer Blutgefäßnachbildung vorzugsweise in drei räumlichen Dimensionen. Insgesamt lässt sich auf diese Weise ein Innenaufbau einer Dentalprothesenbasis angeben, der zu einem realistischen, d. h. naturgetreuen, Erscheinungsbild führt.

Die Aufgabe wird zudem durch ein Verfahren zur Herstellung einer Dentalprothesenbasis mit einer vorgegebenen äußeren Hülle und mit wenigstens einer Blutgefäßnachbildung gelöst. Das Verfahren umfasst:
- Bestimmen eines Innenaufbaus der Dentalprothesenbasis mittels des erfindungsgemäßen Verfahrens zum Bestimmen eines Innenaufbaus einer Dentalprothesenbasis, und
- Fertigen der Dentalprothesenbasis mit dem bestimmten Innenaufbau, wobei die wenigstens eine Blutgefäßnachbildung mittels eines Werkstoffs gefertigt wird, der sich in wenigstens einem ausgewählt aus Material, Farbe, Farbhelligkeit und Transluzenz vom Werkstoff unterscheidet, mittels dem die übrigen Abschnitte der Dentalprothesenbasis gefertigt werden.

Es werden also hinsichtlich Material, Farbe, Farbhelligkeit und/oder Transluzenz unterschiedliche Werkstoffe zum Fertigen der wenigstens einen Blutgefäßnachbildung und zum Fertigen der übrigen Abschnitte des Innenaufbaus der Dentalprothesenbasis verwendet. Eine derartige Dentalprothesenbasis zeichnet sich durch ein äußerst naturgetreues Erscheinungsbild aus. Gleichzeitig ist das erfindungsgemäße Verfahren vergleichsweise einfach und lässt sich insbesondere innerhalb eines CAD-CAM-Workflows leicht umsetzen.

Im Rahmen des Verfahrens zur Herstellung einer Dentalprothesenbasis kann ein additives Fertigungsverfahren zum Fertigen der Dentalprothesenbasis mit dem bestimmten Innenaufbau verwendet werden. Eine alternative Bezeichnung für ein derartiges Fertigungsverfahren ist ein generatives Fertigungsverfahren. Vereinfacht gesagt kann die Dentalprothesenbasis mittels eines 3D-Druck-Verfahrens hergestellt werden. Auf diese Weise lässt sich die Dentalprothesenbasis mit dem bestimmten Innenaufbau zuverlässig und präzise herstellen. Insbesondere sind additive Fertigungsverfahren dazu geeignet, eine patientenindividuelle Dentalprothesenbasis herzustellen. Es versteht sich dabei, dass für ein solches additives Fertigungsverfahren diejenigen Subvolumina der Dentalprothesenbasis, welche der Blutgefäßnachbildung zugeordnet sind, und diejenigen Subvolumina, welche übrigem Zahnfleisch zugeordnet sind, überlappungsfrei sein müssen. Somit ist für jeden Punkt oder jedes Voxel des Innenaufbaus klar, ob er der Nachbildung eines Blutgefäßes oder der Nachbildung eines blutgefäßfreien Zahnfleischabschnitts dient. Alternativ, d.h. wenn diejenigen Subvolumina der Dentalprothesenbasis, welche der Blutgefäßnachbildung zugeordnet sind, und diejenigen Subvolumina, welche übrigem Zahnfleisch zugeordnet sind, nicht überlappungsfrei sind, müssen diejenigen Subvolumina, die der Blutgefäßnachbildung dienen, gegenüber denjenigen Subvolumina, die der Nachbildung des übrigen Zahnfleischs dienen, gegeneinander priorisiert sein. Auch in diesem Fall ist somit für jeden Punkt oder jedes Voxel des Innenaufbaus klar, ob er der Nachbildung eines Blutgefäßes oder der Nachbildung eines blutgefäßfreien Zahnfleischabschnitts dient.

Darüber hinaus wird die Aufgabe von einer Dentalprothesenbasis gelöst, die eine äußere Hülle und einen Innenaufbau aufweist, wobei der Innenaufbau mittels eines erfindungsgemäßen Verfahrens zum Bestimmen eines Innenaufbaus einer Dentalprothesenbasis bestimmt ist. Der Innenaufbau einer solchen Dentalprothesenbasis umfasst also wenigstens eine Blutgefäßnachbildung. Auf diese Weise wird der Dentalprothesenbasis ein natürliches Erscheinungsbild verliehen.

Außerdem wird die Aufgabe von einer Vorrichtung zur Datenverarbeitung gelöst. Die Vorrichtung zur Datenverarbeitung umfasst Mittel zur Ausführung des erfindungsgemäßen Verfahrens zum Bestimmen eines Innenaufbaus einer Dentalprothesenbasis. Mittels einer derartigen Vorrichtung zur Datenverarbeitung lässt sich also ein Innenaufbau der Dentalprothesenbasis bestimmen, der wenigstens eine Blutgefäßnachbildung umfasst. Bevorzugt umfasst der Innenaufbau eine Mehrzahl an Blutgefäßnachbildungen. Auf diese Weise wird der Dentalprothesenbasis ein natürliches Erscheinungsbild verliehen.

Auch wird die Aufgabe durch ein Computerprogramm gelöst, welches Befehle umfasst, die bei der Ausführung des Computerprogramms durch einen Computer diesen veranlassen, das erfindungsgemäße Verfahren zum Bestimmen eines Innenaufbaus einer Dentalprothesenbasis auszuführen. Mittels eines derartigen Computerprogramms lässt sich also ein Innenaufbau der Dentalprothesenbasis bestimmen, der wenigstens eine Blutgefäßnachbildung umfasst. Bevorzugt umfasst der Innenaufbau eine Mehrzahl an Blutgefäßnachbildungen. Auf diese Weise wird der Dentalprothesenbasis ein natürliches Erscheinungsbild verliehen.

Zusätzlich wird die Aufgabe durch ein computerlesbares Medium gelöst, welches Befehle umfasst, die bei der Ausführung durch einen Computer diesen veranlassen, das erfindungsgemäße Verfahren zum Bestimmen eines Innenaufbaus einer Dentalprothesenbasis auszuführen. Mittels eines derartigen computerlesbaren Mediums lässt sich also ein Innenaufbau der Dentalprothesenbasis bestimmen, der wenigstens eine Blutgefäßnachbildung umfasst. Bevorzugt umfasst der Innenaufbau eine Mehrzahl an Blutgefäßnachbildungen. Auf diese Weise wird der Dentalprothesenbasis ein natürliches Erscheinungsbild verliehen.

Es versteht sich, dass die vorstehend im Zusammenhang mit einem aus erfindungsgemäßem Verfahren zum Bestimmen eines Innenaufbaus einer Dentalprothesenbasis, erfindungsgemäßem Verfahren zur Herstellung einer Dentalprothesenbasis, erfindungsgemäßer Dentalprothesenbasis, erfindungsgemäßer Vorrichtung zur Datenverarbeitung, erfindungsgemäßem Computerprogramm und erfindungsgemäßem computerlesbaren Medium genannten Effekte, Vorteile und Merkmale für alle anderen aus erfindungsgemäßem Verfahren zum Bestimmen eines Innenaufbaus einer Dentalprothesenbasis, erfindungsgemäßem Verfahren zur Herstellung einer Dentalprothesenbasis, erfindungsgemäßer Dentalprothesenbasis, erfindungsgemäßer Vorrichtung zur Datenverarbeitung, erfindungsgemäßem Computerprogramm und erfindungsgemäßem computerlesbaren Medium in gleicher Weise gelten.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Vorrichtung zur Datenverarbeitung mit einem erfindungsgemäßen computerlesbaren Medium und einem erfindungsgemäßen Computerprogramm, wobei die Vorrichtung zur Datenverarbeitung dazu ausgebildet ist, ein erfindungsgemäßes Verfahren zum Bestimmen eines Innenaufbaus einer Dentalprothesenbasis auszuführen und wobei die Vorrichtung zur Datenverarbeitung mit einer Herstellungsvorrichtung gekoppelt ist, sodass sich eine erfindungsgemäße Dentalprothesenbasis unter Nutzung eines erfindungsgemäßen Verfahren zur Herstellung einer Dentalprothesenbasis herstellen lässt,
- Figur 2: eine erfindungsgemäße Dentalprothesenbasis, deren Innenaufbau mittels eines erfindungsgemäßen Verfahrens zum Bestimmen eines Innenaufbaus einer Dentalprothesenbasis bestimmt ist und die mittels eines erfindungsgemäßen Verfahrens zur Herstellung einer Dentalprothesenbasis hergestellt ist, wobei die Dentalprothesenbasis in Figur 2 a) in realitätsnaher Form dargestellt ist und in Figur 2 b) schematisch dargestellt ist,
- Figur 3: eine Illustration einer ersten Ausführungsform des erfindungsgemäßen Verfahrens zum Bestimmen eines Innenaufbaus einer Dentalprothesenbasis,
- Figur 4: Visualisierungen verschiedener alternativer Blutgefäßdaten, die im erfindungsgemäßen Verfahren zum Bestimmen eines Innenaufbaus einer Dentalprothesenbasis verwendet werden können,
- Figur 5: eine Visualisierung einer Möglichkeit, Blutgefäßdaten zu generieren,
- Figur 6: eine Visualisierung einer weiteren Möglichkeit, Blutgefäßdaten zu generieren,
- Figur 7: eine Illustration einer zweiten Ausführungsform des erfindungsgemäßen Verfahrens zum Bestimmen eines Innenaufbaus einer Dentalprothesenbasis,
- Figur 8: eine weitere erfindungsgemäße Dentalprothesenbasis, deren Innenaufbau mittels eines erfindungsgemäßen Verfahrens zum Bestimmen eines Innenaufbaus einer Dentalprothesenbasis bestimmt ist und die mittels eines erfindungsgemäßen Verfahrens zur Herstellung einer Dentalprothesenbasis hergestellt ist,
- Figur 9: noch eine erfindungsgemäße Dentalprothesenbasis, deren Innenaufbau mittels eines erfindungsgemäßen Verfahrens zum Bestimmen eines Innenaufbaus einer Dentalprothesenbasis bestimmt ist und die mittels eines erfindungsgemäßen Verfahrens zur Herstellung einer Dentalprothesenbasis hergestellt ist,
- Figur 10: eine Übersicht von im Zuge des erfindungsgemäßen Verfahrens zum Bestimmen eines Innenaufbaus verarbeiteten Daten, und
- Figur 11: eine Übersicht von Verfahrensschritten des erfindungsgemäßen Verfahrens zur Herstellung einer Dentalprothesenbasis und von Verfahrensschritten des erfindungsgemäßen Verfahrens zum Bestimmen eines Innenaufbaus.

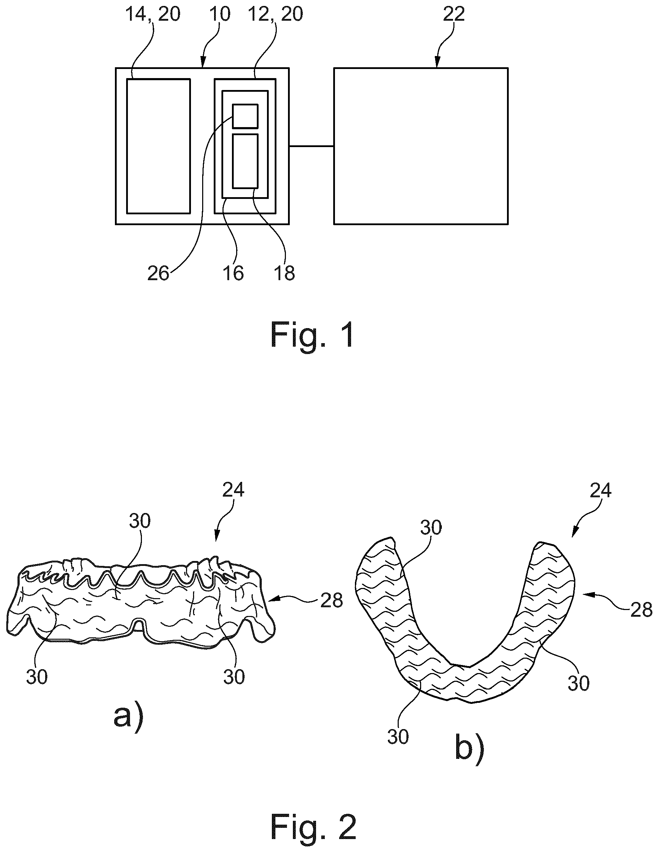

Figur 1 zeigt eine Vorrichtung 10 zur Datenverarbeitung.

Diese umfasst eine Speichereinheit 12 und eine Recheneinheit 14.

Dabei weist die Speichereinheit 12 ein computerlesbares Medium 16 auf.

Auf dem computerlesbaren Medium 16, d. h. auch auf der Speichereinheit 12, ist ein Computerprogramm 18 gespeichert.

Das Computerprogramm 18 und somit auch das computerlesbare Medium 16 umfassen Befehle, die bei der Ausführung des Computerprogramms 18 durch die Recheneinheit 14 oder, allgemeiner gesprochen, durch einen Computer, die Recheneinheit 14 oder den Computer dazu veranlassen, ein Verfahren zum Bestimmen eines Innenaufbaus einer Dentalprothesenbasis auszuführen.

Folglich stellen die Speichereinheit 12 und die Recheneinheit 14 Mittel 20 zum Ausführen des Verfahrens zum Bestimmen eines Innenaufbaus einer Dentalprothesenbasis dar.

Im Beispiel der Figur 1 ist die Vorrichtung 10 zur Datenverarbeitung ferner kommunikationstechnisch mit einer Herstellungsvorrichtung 22 gekoppelt. Dabei ist die Herstellungsvorrichtung 22 dazu ausgebildet, eine Dentalprothesenbasis 24 zu produzieren, die einen Innenaufbau aufweist, welcher mittels des Verfahrens zum Bestimmen des Innenaufbaus der Dentalprothesenbasis 24 bestimmt wurde.

Aus diesem Grund umfasst die Speichereinheit 12 im dargestellten Ausführungsbeispiel zusätzlich ein Computerprogramm 26 zum Ansteuern der Herstellungsvorrichtung 22. Mit anderen Worten umfasst das Computerprogramm 26 Befehle, die bei der Ausführung des Computerprogramms 26 durch die Recheneinheit 14 oder, allgemeiner gesprochen, durch einen Computer, die Recheneinheit 14 oder den Computer dazu veranlassen, die Herstellungsvorrichtung 22 zu steuern.

Im Beispiel der Figur 1 ist die Herstellungsvorrichtung 22 dazu ausgebildet, die Dentalprothesenbasis 24 additiv oder generativ herzustellen. Vereinfacht gesagt kann daher die Herstellungsvorrichtung 22 als 3D-Drucker bezeichnet werden.

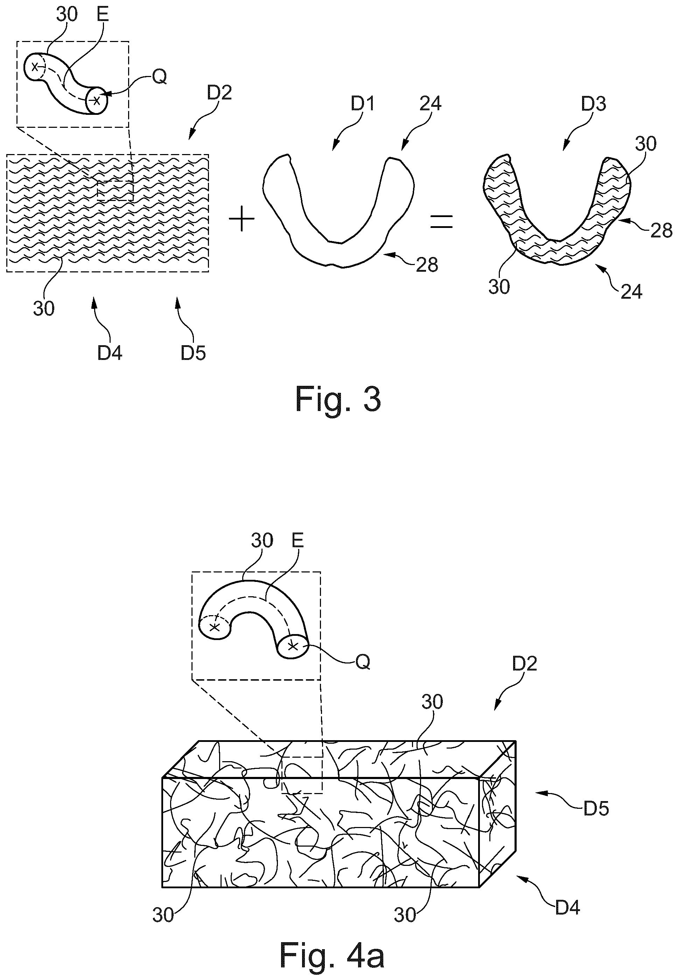

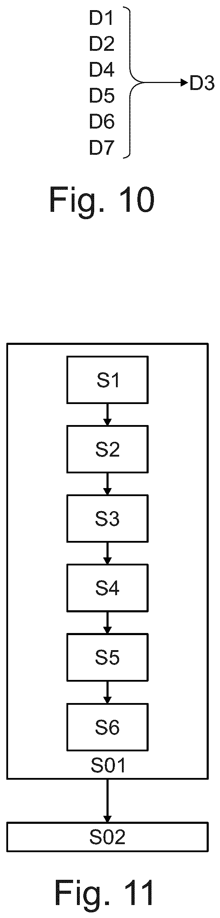

Im Folgenden wird das Verfahren zur Herstellung der Dentalprothesenbasis 24 anhand der Figuren 2 und 3 im Detail erläutert (siehe auch Figur 11).

Die Dentalprothesenbasis 24, die aus der Anwendung des Verfahrens resultiert und daher wenigstens eine Blutgefäßnachbildung 30 umfasst, ist in Figur 2 dargestellt. Wie bereits erwähnt, zeigt Figur 2 a) dabei eine realitätsnahe Abbildung der Dentalprothesenbasis 24 und Figur 2 b) eine schematische Darstellung.

Die Dentalprothesenbasis 24 umfasst eine Mehrzahl an Blutgefäßnachbildungen 30, wobei der besseren Übersichtlichkeit wegen nur einige wenige mit einem Bezugszeichen versehen sind. Es versteht sich, dass die Blutgefäßnachbildungen 30 der Dentalprothesenbasis 24 aus Figur 2 schematischer Natur sind.

Das Verfahren zur Herstellung der Dentalprothesenbasis umfasst zunächst, in einem ersten Schritt S01, das Bestimmen eines Innenaufbaus der Dentalprothesenbasis 24. Hierfür wird ein Verfahren zum Bestimmen eines Innenaufbaus einer Dentalprothesenbasis 24 verwendet.

Vorliegend werden die Schritte des Verfahrens zur Herstellung der Dentalprothesenbasis mit S01 und S02 bezeichnet. Die Schritte des Verfahrens zum Bestimmen eines Innenaufbaus der Dentalprothesenbasis werden mit S1 bis S6 bezeichnet.

Ein erster Schritt S1 des Verfahrens zum Bestimmen eines Innenaufbaus der Dentalprothesenbasis 24 umfasst das Erhalten von Außenhülledaten D1, die eine äußere Hülle 28 der Dentalprothesenbasis 24 beschreiben. Ein Beispiel für eine äußere Hülle 28 der Dentalprothesenbasis 24 ist dabei in Figur 2 grafisch repräsentiert. Ebenso sind die Außenhülledaten D1 in Figur 3 visualisiert.

Die Außenhülledaten D1 können ein Koordinatensystem umfassen, das zur näheren Beschreibung der Außenhülledaten D1 verwendet werden kann.

Bei einem derartigen Koordinatensystem kann der Ursprung in einen Massen- oder Volumenschwerpunkt der äußeren Hülle 28 gelegt werden.

Ein zweiter Schritt S2 des Verfahrens zum Bestimmen eines Innenaufbaus der Dentalprothesenbasis 24 umfasst das Erhalten von Blutgefäßdaten D2, die im dargestellten Beispiel eine Mehrzahl an Blutgefäßnachbildungen 30 beschreiben. Dieses sind in drei räumlichen Dimensionen verteilt angeordnet. Die Blutgefäßdaten D2 beschreiben also ein Volumen, in dem eine Mehrzahl an Blutgefäßnachbildungen 30 angeordnet sind.

Die Blutgefäßdaten D2 sind in Figur 3 visualisiert.

Dabei beschreiben die Blutgefäßdaten D2 jede der Blutgefäßnachbildungen 30 anhand von Geometrieparametern.

In diesem Zusammenhang ist jede Blutgefäßnachbildung 30 als ein nach Art einer Extrusion entlang eines Pfads E geführter Querschnitt Q ausgeführt.

Das bedeutet, dass ein erster Geometrieparameter P1 den Querschnitt Q einer Blutgefäßnachbildung 30 beschreibt. Im dargestellten Beispiel ist der Querschnitt Q kreisscheibenförmig. Der Querschnitt Q lässt sich beispielsweise anhand eines Mittelpunkts und anhand eines Radius beschreiben. Dabei kann der Mittelpunkt beispielsweise in einem Koordinatensystem der Blutgefäßdaten D2 ausgedrückt werden.

Ein zweiter Geometrieparameter P2 beschreibt den Pfad E, entlang dem der Querschnitt Q nach Art einer Extrusion geführt wird. Auch dieser Pfad E wird vorliegend mittels Koordinaten des Koordinatensystems der Blutgefäßdaten D2 ausgedrückt.

Im vorliegenden Beispiel sind alle Blutgefäßnachbildungen 30 der Mehrzahl an Blutgefäßnachbildungen 30 identisch geformt. Daher können alle Blutgefäßnachbildungen 30 mittels des ersten Geometrieparameters P1 und des zweiten Geometrieparameters P2 beschrieben werden.

Ein dritter Schritt S3 des Verfahrens zum Bestimmen des Innenaufbaus umfasst ferner das Erhalten einer Dichteinformation D4, welche eine räumliche Packungsdichte der Blutgefäßnachbildungen 30 beschreibt.

Mit anderen Worten wird im dritten Schritt S3 eine Information erhalten, die angibt, wie die mittels der Blutgefäßdaten D2 beschriebenen Blutgefäßnachbildungen 30 räumlich angeordnet sind. Eine beispielhafte räumliche Anordnung ist in Figur 3 visualisiert.

Auch wenn vorliegend der zweite Schritt S2 und der dritte Schritt S3 separat voneinander beschrieben werden, ist es möglich, dass diese Schritte S2, S3 kombiniert ausgeführt werden. In diesem Zusammenhang können zum Beispiel die Blutgefäßdaten D2 auch eine Dichteinformation D4 umfassen. Diese Dichteinformation D4 kann implizit vorhanden sein.

In einem optional vierten Schritt S4 wird darüber hinaus eine Skalierungsinformation D5 erhalten. Basierend hierauf wird wenigstens eine Abmessung der wenigstens einen, von den Blutgefäßdaten D2 beschriebenen Blutgefäßnachbildung 30 skaliert. Im vorliegenden Beispiel kann auf diese Weise beispielsweise ein Radius des extrudierten Querschnitts Q oder eine Länge des Pfads E, entlang dem der Querschnitt Q nach einer Extrusion geführt wird, skaliert werden.

Nach Ablauf des ersten Schrittes S1, des zweiten Schrittes S2, des dritten Schrittes S3 und des vierten Schrittes S4 sind also die Blutgefäßnachbildungen 30 hinsichtlich ihrer Form, die auch ihre Größe impliziert, sowie hinsichtlich ihrer Position im Raum vollständig definiert. Hierzu werden die Blutgefäßdaten D2 mit der Dichteinformation D4 und der Skalierungsinformation D5 kombiniert.

Figur 3 beinhaltet eine Visualisierung derartiger Blutgefäßnachbildungen 30 und ihrer Positionierung im Raum.

In einem fünften Schritt S5 werden die Außenhülledaten D1 und die Blutgefäßdaten D2 zu Innenaufbaudaten D3 kombiniert.

Dabei kommen boolesche Operationen zum Einsatz.

In diesem Zusammenhang werden die Blutgefäßdaten D2 zunächst mittels der Außenhülledaten D1 in zwei Teile geteilt. Dabei betrifft ein erster Teil Blutgefäßdaten D2, die Blutgefäßnachbildungen im Inneren der von den Außenhülledaten D1 beschriebenen äußeren Hülle 28 beschreiben. Dieser Teil der Blutgefäßdaten D2 kann auch als reduzierte Blutgefäßdaten bezeichnet werden. Der andere Teil beschreibt dementsprechend Blutgefäßnachbildungen, die außerhalb der von den Außenhülledaten D1 beschriebenen äußeren Hülle liegen. Der letztgenannte Teil wird ignoriert. Es versteht sich, dass zu diesem Zweck das Volumen, in dem die Blutgefäßnachbildungen 30 angeordnet sind, so groß sein muss, dass das Volumen der Dentalprothesenbasis 24 vollständig darin aufgenommen werden kann.

Es versteht sich ebenfalls, dass auf diese Weise implizit eine Kombination aus Blutgefäßdaten D2, Dichteinformation D4 und Skalierungsinformation D5 mittels der Außenhülledaten D1 in zwei Teile geteilt wird.

Danach werden die von den reduzierten Blutgefäßdaten beschriebenen Blutgefäßnachbildungen von demjenigen Volumen subtrahiert, das von den Außenhülledaten D1 beschrieben wird. Das resultiert in einem Volumen, das nach außen hin von der äußeren Hülle 28 begrenzt wird und im Inneren an denjenigen Stellen Leerräume aufweist, an denen Blutgefäßnachbildungen 30 vorgesehen werden sollen. Die zugehörigen Daten können als reduzierte Außenhülledaten bezeichnet werden
Nachfolgend können die reduzierten Blutgefäßdaten mit den reduzierten Außenhülledaten vereinigt werden, sodass sich die Innenaufbaudaten D3 ergeben.

Die vorstehenden Schritte sind in Figur 3 vereinfacht als eine Addition illustriert.

Im Ergebnis ergeben sich Innenaufbaudaten D3, die einen Innenaufbau einer Dentalprothesenbasis 24 gemäß Figur 2 beschreiben. Die Innenaufbaudaten beschreiben also eine Anordnung der Blutgefäßnachbildungen 30 innerhalb der äußeren Hülle 28 der Dentalprothesenbasis 24. Jeder Punkt oder jedes Voxel des Innenaufbaus ist eindeutig einer Blutgefäßnachbildung 30 oder einem Abschnitt einer Zahnfleischnachbildung zugeordnet, welcher nicht der Nachbildung eines Blutgefäßes dient.

Nachfolgend werden in einem sechsten Schritt S6 den Blutgefäßnachbildungen 30, die von den Blutgefäßdaten D2 beschrieben werden, eine Farbinformation, eine Farbhelligkeitsinformation, eine Materialinformation und eine Transluzenzinformation zugeordnet.

Das bedeutet, dass festgelegt wird, in welcher Farbe, mit welcher Farbhelligkeit, aus welchem Material und mit welcher Transluzenz die Blutgefäßnachbildungen 30 hergestellt werden.

Darüber hinaus wird den übrigen Abschnitten der Dentalprothesenbasis 24, also denjenigen Abschnitten der Dentalprothesenbasis 24, die keine Blutgefäßnachbildungen 30 darstellen, eine Farbinformation, eine Farbhelligkeitsinformation, eine Materialinformation und eine Transluzenzinformation zugeordnet.

Basierend hierauf kann die Dentalprothesenbasis in einem zweiten Schritt S02 des Verfahrens zur Herstellung der Dentalprothesenbasis 24 gefertigt werden

Dabei werden die Blutgefäßnachbildungen 30 mittels eines Werkstoffs gefertigt, der sich in wenigstens einem ausgewählt aus Material, Farbe, Farbhelligkeit und Transluzenz vom Werkstoff unterscheidet, mittels dem die übrigen Abschnitte der Dentalprothesenbasis 24 gefertigt werden.

Wie bereits erwähnt, wird im vorliegenden Beispiel ein additives Fertigungsverfahren verwendet, das mit der Herstellungsvorrichtung 22 realisiert kann.

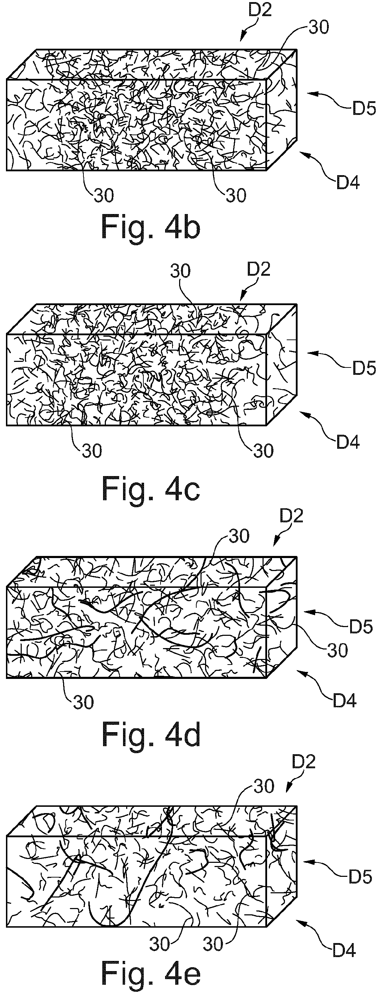

In Figur 4 sind mehrere alternative Blutgefäßdaten D2 visualisiert, welche anstelle der in Figur 3 visualisierten Blutgefäßdaten D2 im Verfahren zum Bestimmen eines Innenaufbaus der Dentalprothesenbasis 24 verwendet werden können. Dabei sind auch eine Dichteinformation D4 und eine Skalierungsinformation D5 berücksichtigt.

Die Blutgefäßdaten D2 aus den Varianten gemäß Figur 4 unterscheiden sich dabei dadurch von den Blutgefäßdaten D2 aus Figur 3, dass bei den Blutgefäßdaten D2 aus Figur 4 keine der von diesen beschriebenen Blutgefäßnachbildungen 30 identisch sind.

Mit anderen Worten beschreiben die Blutgefäßdaten D2 aus allen Varianten gemäß Figur 4 eine Mehrzahl an Blutgefäßnachbildungen 30, wobei jede der Blutgefäßnachbildungen 30 einzigartig ist. Der besseren Übersichtlichkeit wegen sind in den Visualisierungen wieder lediglich nur einige der Blutgefäßnachbildungen 30 mit einem Bezugszeichen versehen.

In allen Varianten gemäß Figur 4 umfassen die Blutgefäßdaten D2 Verfahrensparameter P3, welche ein Vorgehen zum Erstellen der Blutgefäßnachbildungen 30 beschreiben.

Das bedeutet, dass in den Varianten gemäß Figur 4 die Blutgefäßdaten D2 die eigentliche Geometrie der Blutgefäßnachbildungen 30 nicht direkt beschreiben, sondern lediglich über dieses Vorgehen zum Erstellen der Blutgefäßnachbildungen 30.

Dieses Vorgehen umfasst mehrere Schritte, die vorliegend zunächst für die Variante aus Figur 4 a) erläutert werden.

In einem ersten Schritt werden zufälligerweise Startpunkte oder Ankerpunkte für Blutgefäßnachbildungen 30 festgelegt. Dabei wird als Randbedingung ein vorgegebener Mindestabstand berücksichtigt, der zum Beispiel 4 mm bis 6 mm beträgt. In diesem Zusammenhang kann auch eine Dichteinformation D4 berücksichtigt werden, wie bereits im Zusammenhang mit dem Ausführungsbeispiel aus Figur 3 erläutert wurde.

Sodann wird ausgehend von jedem Startpunkt eine zugeordnete Blutgefäßnachbildung 30 durch ein Extrusionsverfahren bestimmt.

Dabei ist ein Querschnitt Q für die Blutgefäßnachbildung 30 wieder festgelegt und ist kreisscheibenförmig.

Eine Form des Pfades E, entlang dem der Querschnitt Q geführt wird, ist jedoch im Beispiel aus Figur 4 a) dem Zufall unterworfen.

Das betrifft einerseits eine Länge des Pfades E, die innerhalb eines vordefinierten Längenintervalls zufällig gewählt ist.

Auch kann der Pfad E im Beispiel gemäß Figur 4 eine oder mehrere Kurven umfassen. Dabei ist auch die Anzahl an Kurven sowie die Position und ein zugehöriger Kurvenradius zufällig bestimmt.

Die von diesen Blutgefäßdaten D2 beschriebenen Blutgefäßnachbildungen 30 sind in Figur 4 visualisiert, wobei eine exemplarische Blutgefäßnachbildung 30 vergrößert dargestellt ist.

Im Übrigen kann auf die vorstehenden Erläuterungen verwiesen werden.

In der Variante aus Figur 4 b) sind die Blutgefäßnachbildungen 30 mittels desselben Vorgehens bestimmt, wobei jedoch im Vergleich zur Figur 4 a) andere Parameter verwendet werden.

Zunächst einmal ist der Mindestabstand, der in der Variante aus Figur 4 b) beim zufälligen Festlegen der Start- oder Ankerpunkte berücksichtigt wird, kleiner als in der Variante aus Figur 4 a). Mit anderen Worten beschreibt in der Variante der Figur 4 b) die Dichteinformation D4 eine dichtere Anordnung der Blutgefäßnachbildungen 30.

Ferner ist ein Querschnitt Q der Blutgefäßnachbildungen in der Variante aus Figur 4 b) kleiner als in der Variante aus Figur 4 a). Das ist dadurch visualisiert, dass die Linien, die die Blutgefäßnachbildungen 30 repräsentieren, dünner sind.

Auch in der Variante aus Figur 4 b) sind die Blutgefäßnachbildungen 30 wieder durch ein Extrusionsverfahren bestimmt.

Dabei ist die Form des Pfades E, entlang dem der Querschnitt Q geführt wird, wieder dem Zufall unterworfen. Allerdings ist im Unterschied zur Variante aus Figur 4 a) das vordefinierte Intervall für die Länge kleiner.

Die Anzahl an Kurven sowie die Position und ein zugehöriger Kurvenradius sind wieder zufällig bestimmt, wobei diese Parameter in der Variante aus Figur 4 b) im Wesentlichen der Variante aus Figur 4 a) entsprechen.

In der Variante aus Figur 4 c) wurde gegenüber der Variante aus Figur 4 b) lediglich der beim zufälligen Festlegen der Start- oder Ankerpunkte berücksichtigte Mindestabstand etwas größer gewählt. Die Blutgefäßnachbildungen 30 sind also etwas weniger dicht angeordnet. Ansonsten wurden dieselben Vorgehensparameter verwendet.

Die Tatsache, dass die Blutgefäßnachbildungen 30 in den Varianten aus Figur 4 b) und Figur 4 c) nicht identisch sind, liegt am Einfluss des Zufalls bei der Positionierung der Start- oder Ankerpunkte sowie der Form und Größe der Blutgefäßnachbildungen 30.

Die Varianten aus den Figuren 4 d) und 4 e) unterscheiden sich dahingehend von den bereits erläuterten Varianten der Figur 4, dass für die Blutgefäßnachbildungen 30 nunmehr unterschiedliche Querschnitte Q verwendet werden. Das ist dadurch visualisiert, dass die Linien, die die Blutgefäßnachbildungen 30 repräsentieren, unterschiedliche Stärken aufweisen.

Darüber hinaus ist in den Varianten aus den Figuren 4 d) und 4 e) für die Blutgefäßnachbildungen 30 mit größeren Querschnitten Q auch eine größere Länge erlaubt, d.h. das zugeordnete vordefinierte Intervall für die Länge betrifft größere Längen.

Optional kann beim Verfahren zum Bestimmen des Innenaufbaus der Dentalprothesenbasis 24, das Erhalten von Blutgefäßdaten D2 auch ein Auswählen der Blutgefäßdaten D2 aus einer Mehrzahl an Blutgefäßdatenalternativen umfassen. Dabei beschreibt jede Blutgefäßdatenalternative wenigstens eine Blutgefäßnachbildung 30. Im vorliegenden Beispiel beschreibt jede Blutgefäßdatenalternative eine Mehrzahl an Blutgefäßnachbildungen 30.

Beispielsweise beschreibt eine erste Blutgefäßdatenalternative Blutgefäßnachbildungen 30, wie sie in Figur 3 illustriert sind. Eine zweite Blutgefäßdatenalternative beschreibt beispielsweise Blutgefäßnachbildungen 30, wie sie in Figur 4 a) illustriert sind. Eine dritte Blutgefäßdatenalternative beschreibt beispielsweise Blutgefäßnachbildungen 30, wie sie in Figur 4 b) illustriert sind. Eine vierte Blutgefäßdatenalternative beschreibt beispielsweise Blutgefäßnachbildungen 30, wie sie in Figur 4 c) illustriert sind. Eine fünfte Blutgefäßdatenalternative beschreibt beispielsweise Blutgefäßnachbildungen 30, wie sie in Figur 4 d) illustriert sind. Eine sechste Blutgefäßdatenalternative beschreibt beispielsweise Blutgefäßnachbildungen 30, wie sie in Figur 4 e) illustriert sind.

Dabei können die Blutgefäßdatenalternativen in Form einer Bibliothek bereitgestellt werden.

Ein Anwender des Verfahrens zum Bestimmen des Innenaufbaus der Dentalprothesenbasis 24 kann somit aus einer solchen Bibliothek die gewünschte Blutgefäßdatenalternative auswählen. Vorliegend würde der Anwender also zwischen den Blutgefäßdaten D2 gemäß Figur 3 und den Blutgefäßdaten D2 gemäß der verschiedenen Varianten der Figur 4 wählen.

Alternativ kann eine Blutgefäßdatenalternative aus mehreren Blutgefäßdatenalternativen automatisiert ausgewählt werden.

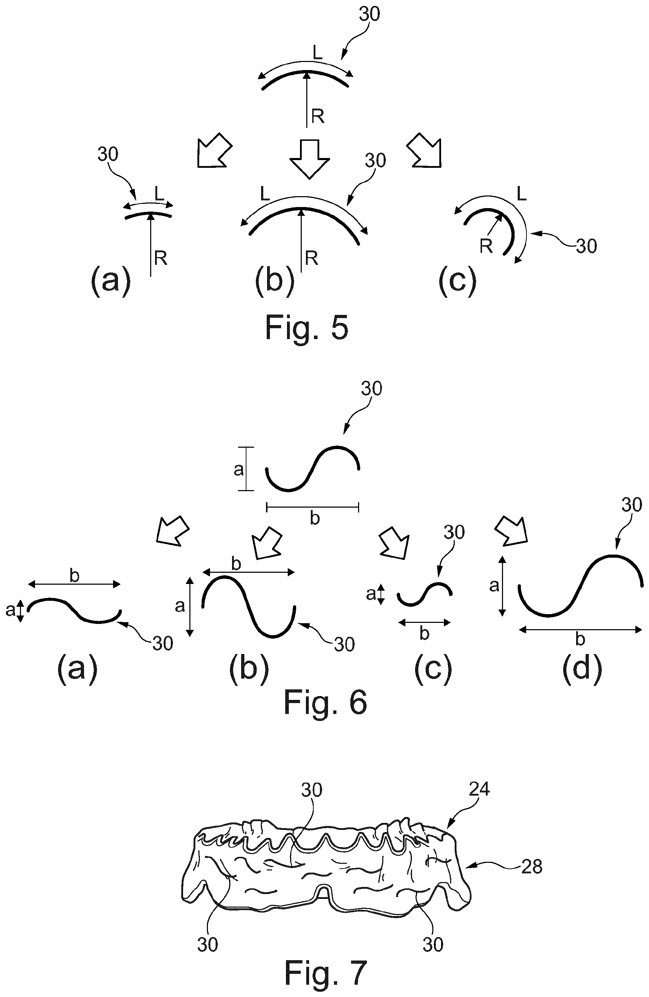

In Figur 5 ist eine weitere Alternative zum Erstellen von Blutgefäßdaten D2 beschrieben.

In dieser Alternative werden die Blutgefäßdaten D2 ausgehend von einer Beschreibung einer einzigen Blutgefäßnachbildung 30 generiert.

Ein derartige Blutgefäßnachbildung 30 kann auch als Template oder Vorlage beschrieben werden.

Im Beispiel der Figur 5 beschreiben die Blutgefäßdaten D2 eine bogenförmige Blutgefäßnachbildung 30. Diese kann durch einen Krümmungsradius R sowie durch eine Länge L beschrieben werden.

Dabei können ausgehend von diesem Template oder dieser Vorlage weitere Blutgefäßdatenelemente generiert werden, die Blutgefäßnachbildungen 30 beschreiben, welche sich von der Vorlage dadurch unterscheiden, dass sie einen anderen Krümmungsradius R und/oder eine andere Länge L aufweisen.

In diesem Zusammenhang ist in Figur 5 (a) eine Blutgefäßnachbildung 30 zu sehen, bei der ausgehend vom Template der Krümmungsradius R gleich gehalten wurde, jedoch die Länge L verkürzt wurde.

Figur 5 (b) zeigt eine Blutgefäßnachbildung 30, bei der ausgehend vom Template der Krümmungsradius R gleich gehalten wurde, jedoch die Länge L vergrößert wurde.

In Figur 5 (c) ist eine Blutgefäßnachbildung 30 gezeigt, bei der ausgehend vom Template der Krümmungsradius R verkleinert wurde. Dabei wurde die Länge L gegenüber dem Template nicht verändert.

Blutgefäßdaten D2, die derartige verschiedene Blutgefäßnachbildungen 30 beschreiben, können dann ähnlich wie bereits erläutert, an räumlich verteilten Startpunkten oder Ankerpunkten angeordnet werden.

Basierend hierauf können die Blutgefäßdaten D2 mit Außenhülledaten D1 kombiniert werden, z. B. unter Nutzung einer booleschen Operation, wie bereits erläutert.

In Figur 6 ist eine weitere Alternative zum Erstellen von Blutgefäßdaten D2 beschrieben.

In dieser Alternative werden die Blutgefäßdaten D2 wieder ausgehend von einer Beschreibung einer einzigen Blutgefäßnachbildung 30 generiert, die wieder als Template oder Vorlage beschrieben werden kann.

Im Beispiel der Figur 6 beschreiben die Blutgefäßdaten D2 eine S-förmige Blutgefäßnachbildung 30, d.h. eine Blutgefäßnachbildung 30, die im Wesentlichen aus zwei Kreisbogensegmenten zusammengesetzt ist, welche entgegengesetzte Krümmungen aufweisen.

Im Beispiel der Figur 6 werden unter Nutzung von Skalierungsinformationen D5 weitere Blutgefäßdatenelemente abgeleitet, die weitere Blutgefäßnachbildungen 30 beschreiben. Dabei wird stets ausgehend von der Vorlage wenigstens eine Abmessung der Blutgefäßnachbildung 30 skaliert.

In diesem Zusammenhang beschreibt die Variante in Figur 6 (a) eine Blutgefäßnachbildung 30, die durch eine Stauchung der Abmessung a entstanden ist.

Die Variante in Figur 6 (b) beschreibt eine Blutgefäßnachbildung 30, die durch eine Streckung der Abmessung a entstanden ist.

Die Variante in Figur 6 (c) zeigt eine Blutgefäßnachbildung 30, die durch eine Verkleinerung, d.h. eine proportionale Stauchung der Abmessungen a und b entstanden ist.

Die Variante in Figur 6 (d) zeigt eine Blutgefäßnachbildung 30, die durch eine Vergrößerung, d.h. eine proportionale Streckung der Abmessungen a und b entstanden ist.

Figur 7 illustriert eine zweite Ausführungsform des Verfahrens zum Bestimmen eines Aufbaus der Dentalprothesenbasis 24.

Im Unterschied zu den zuvor beschriebenen Beispielen umfasst das Kombinieren der Außenhülledaten D1 und der Blutgefäßdaten D2 im zweiten Ausführungsbeispiel ein ausschließliches Anwenden der Blutgefäßdaten D2 innerhalb der von den Außenhülledaten D1 beschriebenen äußeren Hülle 28. Es findet also keine boolesche Operation statt. Vielmehr wird, vereinfacht gesagt, das von der äußeren Hülle 28 begrenzte Volumen der Dentalprothesenbasis 24 mit Blutgefäßnachbildungen 30 befüllt.

Das bedeutet, dass in einem Fall, in dem Blutgefäßdaten D2 die Blutgefäßnachbildungen 30 anhand von Geometrieparametern beschreiben, die Blutgefäßdaten D2 derart mit den Außenhülledaten D1 kombiniert werden, dass die Blutgefäßnachbildungen 30 stets im Inneren der von den Außenhülledaten D1 beschriebenen äußeren Hülle 28 liegen.

In einem solchen Fall können im Inneren der äußeren Hülle Start- oder Ankerpunkte vorgesehen werden und jedem Start- oder Ankerpunkt kann eine Blutgefäßnachbildung 30 zugeordnet werden, die bevorzugt auch relativ zum zugeordneten Start- oder Ankerpunkt positioniert wird.

Zum Vorsehen der Start- oder Ankerpunkte gibt es mehrere Alternativen.

Gemäß einer ersten Alternative können die Start- oder Ankerpunkte als Punkte eines regelmäßigen oder unregelmäßigen Rasters vorgesehen werden.

Gemäß einer zweiten Alternative können die Start- oder Ankerpunkte zufällig im Inneren der äußeren Hülle 28 angeordnet werden. Dabei können Mindestabstände als Randbedingungen vorgegeben werden, wie bereits weiter oben erläutert.

Für den Fall, dass die Blutgefäßdaten D2 die Blutgefäßnachbildungen 30 anhand von Verfahrensparametern beschreiben, gilt dasselbe. Das bedeutet, dass die Blutgefäßnachbildungen 30 derart generiert werden, dass sie stets im Inneren der von den Außenhülledaten D1 beschriebenen äußeren Hülle 28 liegen.

Zu diesem Zweck können die anhand der Varianten der Figur 4 erläuterten Vorgehen verwendet werden, wobei diese jedoch ausschließlich auf das von der äußeren Hülle 28 begrenzte Volumen der Dentalprothesenbasis 24 angewendet werden. Auf diese Weise kann das Bestimmen einer Schnittmenge des Volumens der Dentalprothesenbasis 24 und eines Volumens, in dem die Blutgefäßnachbildungen 30 angeordnet sind, entfallen.

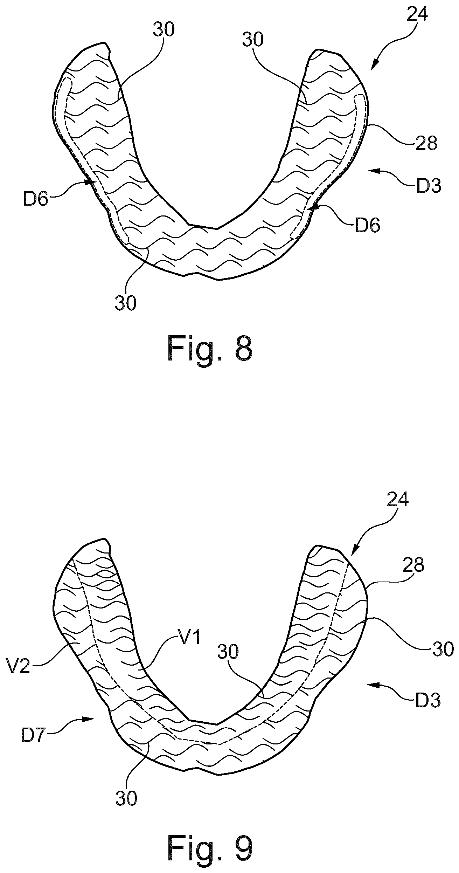

Als Option können in allen zuvor erläuterten Varianten und Ausführungsformen des Verfahrens zum Bestimmen eines Innenaufbaus der Dentalprothesenbasis 24 Sperrdaten D6 erhalten werden. Das wird im Folgenden anhand der Figur 8 erläutert, die dies visualisiert.

Dabei beschreiben die Sperrdaten D6 wenigstens einen blutgefäßfreien Abschnitt innerhalb der äußeren Hülle 28 der Dentalprothesenbasis 24. Das bedeutet, dass die Sperrdaten D6 wenigstens einen Abschnitt definieren, in dem keine Blutgefäßnachbildungen 30 angeordnet werden.

Diese Sperrdaten D6 werden dann mit den Außenhülledaten D1 und den Blutgefäßdaten D2 zu Innenaufbaudaten D3 kombiniert.

Auf diese Weise beschreiben die Innenaufbaudaten D3 lediglich Blutgefäßnachbildungen 30 für Abschnitte der Dentalprothesenbasis 24, die innerhalb der äußeren Hülle 28 der Dentalprothesenbasis 24 und außerhalb des von den Sperrdaten D6 beschriebenen wenigstens einen blutgefäßfreien Abschnitts liegen.

In einem Beispiel wird auf diese Weise eine Randschicht der Dentalprothesenbasis 24 generiert, die frei von Blutgefäßnachbildungen 30 ist.

In Figur 8 sind zwei Abschnitte einer derartigen Randschicht visualisiert, die frei von Blutgefäßnachbildungen 20 sind. Es versteht sich, dass diese Abschnitte rein exemplarisch sind.

Gemäß einer weiteren Option, die mit allen erläuterten Varianten und Ausführungsformen des Verfahrens zum Bestimmen eines Innenaufbaus kompatibel ist, werden im Zuge des Verfahrens zum Bestimmen eines Innenaufbaus Subvolumendaten D7 erhalten. Das wird nachfolgend anhand von Figur 9 erläutert.

Dabei beschreiben die Subvolumendaten D7 jeweils einen Abschnitt der von den Außenhülledaten D1 beschriebenen Dentalprothesenbasis 24.

Auf dieser Basis können die Außenhülledaten D1, die Subvolumendaten D7 und die Blutgefäßdaten D2 zu Innenaufbaudaten D3 kombiniert werden, sodass die Innenaufbaudaten D3 eine Anordnung der wenigstens einen Blutgefäßnachbildung 30 innerhalb des von den Subvolumendaten D7 beschriebenen Abschnitts der Dentalprothesenbasis 24 beschreiben.

Vereinfacht gesagt werden also lediglich innerhalb des mittels der Subvolumendaten D7 beschriebenen Subvolumens Blutgefäßnachbildungen 30 vorgesehen.

In einer Variante werden dabei Subvolumendaten D7 erhalten, die unterschiedliche Subvolumina, d.h. unterschiedliche Abschnitte der von den Außenhülledaten D1 beschriebenen Dentalprothesenbasis 24 beschreiben. Vorzugsweise sind die unterschiedlichen Subvolumina überlappungsfrei. In einem solchen Fall können in jedem dieser Subvolumina die Blutgefäßnachbildungen 30 anders sein. Beispielsweise können sich die Blutgefäßnachbildungen 30 in ihrer Form und/oder in ihrer räumlichen Packungsdichte unterscheiden.

Im Beispiel aus Figur 9 sind im Subvolumen V1 die Blutgefäßnachbildungen 30 mit einer höheren Packungsdichte vorgesehen als im Subvolumen V2. Das Subvolumen V1 und das Subvolumen V2 werden von den Subvolumendaten D7 beschrieben.

Es versteht sich wieder, dass die Darstellung aus Figur 9 rein exemplarisch ist.

Das Zusammenwirken der Außenhülledaten D1, der Blutgefäßdaten D2, der Dichteinformation D4, der Skalierungsinformation D5, der Sperrdaten D6 und der Subvolumendaten D7 beim Erstellen der Innenaufbaudaten D3 ist in Figur 10 zusammengefasst.

Zudem sind die Schritte des Verfahrens zum Herstellen der Dentalprothesenbasis 24 und die Schritte des Verfahrens zum Bestimmen eines Innenaufbaus der Dentalprothesenbasis 24 in Figur 11 zusammengefasst.

### Bezugszeichenliste

- 10: Vorrichtung zur Datenverarbeitung
- 12: Speichereinheit
- 14: Recheneinheit
- 16: computerlesbares Medium
- 18: Computerprogramm
- 20: Mittel zum Ausführen eines Verfahrens zum Bestimmen eines Innenaufbaus einer Dentalprothesenbasis
- 22: Herstellungsvorrichtung
- 24: Dentalprothesenbasis
- 26: Computerprogramm
- 28: äußere Hülle
- 30: Blutgefäßnachbildung

- a: Abmessung
- b: Abmessung
- D1: Außenhülledaten
- D2: Blutgefäßdaten
- D3: Innenaufbaudaten
- D4: Dichteinformation
- D5: Skalierungsinformation
- D6: Sperrdaten
- D7: Subvolumendaten
- E: Pfad
- L: Länge
- P1: erster Geometrieparameter
- P2: zweiter Geometrieparameter
- P3: Verfahrensparameter
- Q: Querschnitt
- R: Krümmungsradius
- S01: erster Schritt des Verfahrens zur Herstellung einer Dentalprothesenbasis
- S02: zweiter Schritt zur Herstellung einer Dentalprothesenbasis
- S1: erster Schritt eines Verfahrens zum Bestimmen eines Innenaufbaus einer Dentalprothesenbasis
- S2: zweiter Schritt eines Verfahrens zum Bestimmen eines Innenaufbaus einer Dentalprothesenbasis
- S3: dritter Schritt eines Verfahrens zum Bestimmen eines Innenaufbaus einer Dentalprothesenbasis
- S4: vierter Schritt eines Verfahrens zum Bestimmen eines Innenaufbaus einer Dentalprothesenbasis
- S5: fünfter Schritt eines Verfahrens zum Bestimmen eines Innenaufbaus einer Dentalprothesenbasis
- S6: sechster Schritt eines Verfahrens zum Bestimmen eines Innenaufbaus einer Dentalprothesenbasis
- V1: Subvolumen
- V2: Subvolumen

## Patentansprüche

1. Verfahren zum Bestimmen eines Innenaufbaus einer Dentalprothesenbasis (24) mit wenigstens einer Blutgefäßnachbildung (30), umfassend:
- Erhalten von Außenhülledaten (D1), die eine äußere Hülle (28) der Dentalprothesenbasis (24) beschreiben (S1),
**gekennzeichnet durch**
- Erhalten von Blutgefäßdaten (D2), die wenigstens eine Blutgefäßnachbildung (30) beschreiben (S2), und
- Kombinieren der Außenhülledaten (D1) und der Blutgefäßdaten (D2) zu Innenaufbaudaten (D3), wobei die Innenaufbaudaten (D3) eine Anordnung der wenigstens einen Blutgefäßnachbildung (30) innerhalb der äußeren Hülle (28) der Dentalprothesenbasis (24) beschreiben (S5).

2. Verfahren nach Anspruch 1, wobei das Kombinieren der Außenhülledaten (D1) und der Blutgefäßdaten (D2) zu Innenaufbaudaten (D3) eine boolesche Operation umfasst und/oder wobei das Kombinieren der Außenhülledaten (D1) und der Blutgefäßdaten (D2) zu Innenaufbaudaten (D3) ein ausschließliches Anwenden der Blutgefäßdaten (D2) innerhalb der von den Außenhülledaten (D1) beschriebenen äußeren Hülle (28) der Dentalprothesenbasis (24) umfasst.

3. Verfahren nach Anspruch 1 oder 2, wobei die Blutgefäßdaten (D2) wenigstens einen Geometrieparameter (P1, P2) umfassen, welcher eine Geometrie der Blutgefäßnachbildung (30) beschreibt, und/oder wobei die Blutgefäßdaten (D2) wenigstens einen Verfahrensparameter (P3) umfassen, welcher ein Vorgehen zum Erstellen der Blutgefäßnachbildung (30) beschreibt.

4. Verfahren nach einem der vorhergehenden Ansprüche, wobei die wenigstens eine Blutgefäßnachbildung (30) als ein nach Art einer Extrusion entlang eines Pfads (E) geführter Querschnitt (Q) beschrieben ist.

5. Verfahren nach einem der vorhergehenden Ansprüche, wobei die Blutgefäßdaten (D2) eine Mehrzahl an Blutgefäßnachbildungen (30) beschreiben, wobei die Blutgefäßnachbildungen (30) in drei Dimensionen verteilt angeordnet sind.

6. Verfahren nach Anspruch 5, ferner umfassend
- Erhalten einer Dichteinformation (D4), welche eine räumliche Packungsdichte der Blutgefäßnachbildungen (30) beschreibt (S3), und
- Kombinieren der Dichteinformation (D4) und der Blutgefäßdaten (D2), sodass die Mehrzahl an Blutgefäßnachbildungen (30) mit der räumlichen Packungsdichte in drei Dimensionen verteilt angeordnet sind.

7. Verfahren nach einem der vorhergehenden Ansprüche, ferner umfassend Erhalten einer Skalierungsinformation (D5) und Skalieren wenigstens einer Abmessung der wenigstens einen, von den Blutgefäßdaten (D2) beschriebenen Blutgefäßnachbildung (30) basierend auf der Skalierungsinformation (D5) (S4).

8. Verfahren nach einem der vorhergehenden Ansprüche, ferner umfassend
- Zuordnen einer Farbinformation zu der wenigstens einen, von den Blutgefäßdaten (D2) beschriebenen Blutgefäßnachbildung (30), und/oder
- Zuordnen einer Farbhelligkeitsinformation zu der wenigstens einen, von den Blutgefäßdaten (D2) beschriebenen Blutgefäßnachbildung (30), und/oder
- Zuordnen einer Materialinformation zu der wenigstens einen, von den Blutgefäßdaten (D2) beschriebenen Blutgefäßnachbildung (30), und/oder
- Zuordnen einer Transluzenzinformation zu der wenigstens einen, von den Blutgefäßdaten (D2) beschriebenen Blutgefäßnachbildung (30) (S6).

9. Verfahren nach einem der vorhergehenden Ansprüche, ferner umfassend
- Erhalten von Sperrdaten (D6), die wenigstens einen blutgefäßfreien Abschnitt innerhalb der äußeren Hülle (28) der Dentalprothesenbasis (24) beschreiben, und
- Kombinieren der Außenhülledaten (D1) und der Blutgefäßdaten (D2) zu Innenaufbaudaten (D3) für Abschnitte innerhalb der äußeren Hülle (28) der Dentalprothesenbasis (24) und außerhalb des von den Sperrdaten (D6) beschriebenen wenigstens einen blutgefäßfreien Abschnitts.

10. Verfahren nach einem der vorhergehenden Ansprüche, ferner umfassend
- Erhalten von Subvolumendaten (D7), welche einen Abschnitt eines Inneren der von den Außenhülledaten (D1) beschriebenen äußeren Hülle (28) der Dentalprothesenbasis (24) beschreiben,
- Kombinieren der Außenhülledaten (D1), der Subvolumendaten (D7) und der Blutgefäßdaten (D2) zu Innenaufbaudaten (D3), wobei die Innenaufbaudaten (D3) eine Anordnung der wenigstens einen Blutgefäßnachbildung (30) innerhalb des von den Subvolumendaten (D7) beschriebenen Abschnitts des Inneren der äußeren Hülle (28) der Dentalprothesenbasis (24) beschreiben.

11. Verfahren nach einem der vorhergehenden Ansprüche, wobei das Erhalten von Blutgefäßdaten (D2) ein Auswählen der Blutgefäßdaten (D2) aus einer Mehrzahl an Blutgefäßdatenalternativen umfasst, wobei jede der Blutgefäßdatenalternativen wenigstens eine Blutgefäßnachbildung (30) beschreibt.

12. Verfahren zur Herstellung einer Dentalprothesenbasis (24) mit einer vorgegebenen äußeren Hülle (28) und mit wenigstens einer Blutgefäßnachbildung (30), umfassend:
- Bestimmen eines Innenaufbaus der Dentalprothesenbasis (24) mittels des Verfahrens nach einem der vorhergehenden Ansprüche (S01), und
- Fertigen der Dentalprothesenbasis (24) mit dem bestimmten Innenaufbau, wobei die wenigstens eine Blutgefäßnachbildung (30) mittels eines Werkstoffs gefertigt wird, der sich in wenigstens einem ausgewählt aus Material, Farbe, Farbhelligkeit und Transluzenz vom Werkstoff unterscheidet, mittels dem die übrigen Abschnitte der Dentalprothesenbasis (24) gefertigt werden (S02).

13. Verfahren nach Anspruch 12, wobei ein additives Fertigungsverfahren zum Fertigen der Dentalprothesenbasis (24) mit dem bestimmten Innenaufbau verwendet wird.

14. Vorrichtung (10) zur Datenverarbeitung, umfassend Mittel (20) konfiguriert zur Ausführung des Verfahrens nach einem der Ansprüche 1 bis 11.

15. Computerprogramm (18), umfassend Befehle, die bei der Ausführung des Computerprogramms (18) durch einen Computer diesen veranlassen, das Verfahren nach einem der Ansprüche 1 bis 11 auszuführen.

16. Computerlesbares Medium (16), umfassend Befehle, die bei der Ausführung durch einen Computer diesen veranlassen, das Verfahren nach einem der Ansprüche 1 bis 11 auszuführen.

## Claims

1. Method for determining an internal structure of a dental prosthesis base (24) having at least one blood vessel replica (30), comprising:
- obtaining outer shell data (D1) which describe an outer shell (28) of the dental prosthesis base (24) (S1),
**characterised by**
- obtaining blood vessel data (D2) which describe at least one blood vessel replica (30) (S2), and
- combining the outer shell data (D1) and the blood vessel data (D2) to form internal structure data (D3), the internal structure data (D3) describing an arrangement of the at least one blood vessel replica (30) within the outer shell (28) of the dental prosthesis base (24) (S5).

2. Method according to claim 1, wherein combining the outer shell data (D1) and the blood vessel data (D2) to form internal structure data (D3) includes a Boolean operation and/or wherein combining the outer shell data (D1) and the blood vessel data (D2) to form internal structure data (D3) includes exclusively using the blood vessel data (D2) within the outer shell (28) of the dental prosthesis base (24) described by the outer shell data (D1).

3. Method according to either claim 1 or claim 2, wherein the blood vessel data (D2) contain at least one geometric parameter (P1, P2) which describes a geometry of the blood vessel replica (30), and/or wherein the blood vessel data (D2) contain at least one method parameter (P3) which describes a process for creating the blood vessel replica (30).

4. Method according to any of the preceding claims, wherein the at least one blood vessel replica (30) is described as a cross section (Q) running along a path (E) in the manner of an extrusion.

5. Method according to any of the preceding claims, wherein the blood vessel data (D2) describe a plurality of blood vessel replicas (30), the blood vessel replicas (30) being distributed in three dimensions.

6. Method according to claim 5, further comprising
- obtaining density information (D4) which describes a spatial packing density of the blood vessel replicas (30) (S3), and
- combining the density information (D4) and the blood vessel data (D2) in such a way that the plurality of blood vessel replicas (30) are distributed in three dimensions with the spatial packing density.

7. Method according to any of the preceding claims, further comprising obtaining scaling information (D5) and scaling, on the basis of the scaling information (D5), at least one dimension of the at least one blood vessel replica (30) described by the blood vessel data (D2) (S4).

8. Method according to any of the preceding claims, further comprising
- assigning colour information to the at least one blood vessel replica (30) described by the blood vessel data (D2), and/or
- assigning colour brightness information to the at least one blood vessel replica (30) described by the blood vessel data (D2), and/or
- assigning material information to the at least one blood vessel replica (30) described by the blood vessel data (D2), and/or
- assigning translucency information to the at least one blood vessel replica (30) described by the blood vessel data (D2) (S6).

9. Method according to any of the preceding claims, further comprising
- obtaining block-out data (D6) which describe at least one blood-vessel-free portion within the outer shell (28) of the dental prosthesis base (24), and
- combining the outer shell data (D1) and the blood vessel data (D2) to form internal structure data (D3) for portions within the outer shell (28) of the dental prosthesis base (24) and outside the at least one blood-vessel-free portion described by the block-out data (D6).

10. Method according to any of the preceding claims, further comprising
- obtaining sub-volume data (D7) which describe a portion of an interior of the outer shell (28) of the dental prosthesis base (24) described by the outer shell data (D1),
- combining the outer shell data (D1), the sub-volume data (D7) and the blood vessel data (D2) to form internal structure data (D3), wherein the internal structure data (D3) describe an arrangement of the at least one blood vessel replica (30) within the portion of the interior of the outer shell (28) of the dental prosthesis base (24) described by the sub-volume data (D7).

11. Method according to any of the preceding claims, wherein obtaining blood vessel data (D2) includes selecting the blood vessel data (D2) from a plurality of blood vessel data alternatives, each of the blood vessel data alternatives describing at least one blood vessel replica (30).

12. Method for producing a dental prosthesis base (24) having a predetermined outer shell (28) and having at least one blood vessel replica (30), comprising:
- determining an internal structure of the dental prosthesis base (24) by means of the method according to any of the preceding claims (S01), and
- manufacturing the dental prosthesis base (24) with the determined internal structure, the at least one blood vessel replica (30) being manufactured by means of a substance which differs in terms of at least one property selected from material, colour, colour brightness and translucency from the substance by means of which the remaining portions of the dental prosthesis base (24) are manufactured (S02).

13. Method according to claim 12, wherein an additive manufacturing method is used for manufacturing the dental prosthesis base (24) with the determined internal structure.

14. Device (10) for data processing, comprising means (20) configured to carry out the method according to any of claims 1 to 11.

15. Computer program (18), comprising commands which, when the computer program (18) is executed by a computer, cause said computer to carry out the method according to any of claims 1 to 11.

16. Computer-readable medium (16), comprising commands which, when executed by a computer, cause said computer to carry out the method according to any of claims 1 to 11.

## Revendications

1. Procédé de détermination d'une structure interne d'une base de prothèse dentaire (24) comportant au moins une reproduction de vaisseaux sanguins (30), comprenant :
- l'obtention de données d'enveloppe externe (D1), qui décrivent une enveloppe externe (28) de la base de prothèse dentaire (24) (S1),
**caractérisé par**
- l'obtention de données de vaisseaux sanguins (D2), qui décrivent au moins une reproduction de vaisseaux sanguins (30) (S2), et
- la combinaison des données d'enveloppe externe (D1) et des données de vaisseaux sanguins (D2) en données de structure interne (D3), les données de structure interne (D3) décrivant un agencement de l'au moins une reproduction de vaisseaux sanguins (30) à l'intérieur de l'enveloppe externe (28) de la base de prothèse dentaire (24) (S5).

2. Procédé selon la revendication 1, dans lequel la combinaison des données d'enveloppe externe (D1) et des données de vaisseaux sanguins (D2) en données de structure interne (D3) comprend une opération booléenne et/ou dans lequel la combinaison des données d'enveloppe externe (D1) et des données de vaisseaux sanguins (D2) en données de structure interne (D3) comprend une application des données de vaisseaux sanguins (D2) exclusivement à l'intérieur de l'enveloppe externe (28) de la base de prothèse dentaire (24) décrite par les données d'enveloppe externe (D1).

3. Procédé selon la revendication 1 ou 2, dans lequel les données de vaisseaux sanguins (D2) comprennent au moins un paramètre géométrique (P1, P2), qui décrit une géométrie de la reproduction de vaisseaux sanguins (30), et/ou dans lequel les données de vaisseaux sanguins (D2) contiennent au moins un paramètre de procédé (P3), qui décrit une manière de réaliser la reproduction de vaisseaux sanguins (30).

4. Procédé selon l'une quelconque des revendications précédentes, dans lequel l'au moins une reproduction de vaisseaux sanguins (30) est décrite comme une section transversale (Q) s'étendant le long d'un trajet (E) à la manière d'une extrusion.

5. Procédé selon l'une quelconque des revendications précédentes, dans lequel les données de vaisseaux sanguins (D2) décrivent une pluralité de reproductions de vaisseaux sanguins (30), dans lequel les reproductions de vaisseaux sanguins (30) sont réparties dans les trois dimensions.

6. Procédé selon la revendication 5, comprenant en outre
- l'obtention d'une information de densité (D4), qui décrit une densité d'empilement spatiale des reproductions de vaisseaux sanguins (30) (S3), et
- la combinaison de l'information de densité (D4) et des données de vaisseaux sanguins (D2), de telle sorte que la pluralité de reproductions de vaisseaux sanguins (30) soit répartie dans les trois dimensions avec la densité d'empilement spatiale.

7. Procédé selon l'une quelconque des revendications précédentes, comprenant en outre l'obtention d'une information de mise à l'échelle (D5) et la mise à l'échelle d'au moins une dimension de l'au moins une reproduction de vaisseaux sanguins (30) décrite par les données de vaisseaux sanguins (D2), sur la base de l'information de mise à l'échelle (D5) (S4).

8. Procédé selon l'une quelconque des revendications précédentes, comprenant en outre
- l'attribution d'une information de couleur à l'au moins une reproduction de vaisseaux sanguins (30) décrite par les données de vaisseaux sanguins (D2), et/ou
- l'attribution d'une information de luminosité de couleur à l'au moins une reproduction de vaisseaux sanguins (30) décrite par les données de vaisseaux sanguins (D2), et/ou
- l'attribution d'une information de matériau à l'au moins une reproduction de vaisseaux sanguins (30) décrite par les données de vaisseaux sanguins (D2), et/ou
- l'attribution d'une information de translucidité à l'au moins une reproduction de vaisseaux sanguins (30) décrite par les données de vaisseaux sanguins (D2) (S6).

9. Procédé selon l'une quelconque des revendications précédentes, comprenant en outre
- l'obtention de données d'exclusion (D6), qui décrivent au moins une section dépourvue de vaisseaux sanguins à l'intérieur de l'enveloppe externe (28) de la base de prothèse dentaire (24), et
- la combinaison des données d'enveloppe externe (D1) et des données de vaisseaux sanguins (D2) en données de structure interne (D3) pour des sections situées à l'intérieur de l'enveloppe externe (28) de la base de prothèse dentaire (24) et à l'extérieur de l'au moins une section dépourvue de vaisseaux sanguins décrite par les données d'exclusion (D6).

10. Procédé selon l'une quelconque des revendications précédentes, comprenant en outre
- l'obtention de données de sous-volume (D7), qui décrivent une section d'un intérieur de l'enveloppe externe (28) de la base de prothèse dentaire (24) décrite par les données d'enveloppe externe (D1),
- la combinaison des données d'enveloppe externe (D1), des données de sous-volume (D7) et des données de vaisseaux sanguins (D2) en données de structure interne (D3), les données de structure interne (D3) décrivant un agencement de l'au moins une reproduction de vaisseaux sanguins (30) à l'intérieur de la section de l'intérieur de l'enveloppe externe (28) de la base de prothèse dentaire (24) décrite par les données de sous-volume (D7).

11. Procédé selon l'une quelconque des revendications précédentes, dans lequel l'obtention de données de vaisseaux sanguins (D2) comporte une sélection des données de vaisseaux sanguins (D2) parmi une pluralité d'alternatives de données de vaisseaux sanguins, dans lequel chacune des alternatives de données de vaisseaux sanguins décrit au moins une reproduction de vaisseaux sanguins (30).

12. Procédé de fabrication d'une base de prothèse dentaire (24) présentant une enveloppe externe (28) prédéfinie et au moins une reproduction de vaisseaux sanguins (30), comprenant :
- la détermination d'une structure interne de la base de prothèse dentaire (24) au moyen du procédé selon l'une quelconque des revendications précédentes (S01), et
- la fabrication de la base de prothèse dentaire (24) avec la structure interne déterminée, l'au moins une reproduction de vaisseaux sanguins (30) étant fabriquée au moyen d'un matériau qui diffère, par au moins un élément choisi parmi le matériau, la couleur, la luminosité de couleur et la translucidité, du matériau au moyen duquel les autres sections de la base de prothèse dentaire (24) sont fabriquées (S02).

13. Procédé selon la revendication 12, dans lequel un procédé de fabrication additive est utilisé pour fabriquer la base de prothèse dentaire (24) avec la structure interne déterminée.

14. Dispositif (10) de traitement de données, comprenant des moyens (20) configurés pour exécuter le procédé selon l'une quelconque des revendications 1 à 11.

15. Programme d'ordinateur (18), comprenant des instructions qui, lors de l'exécution du programme d'ordinateur (18) par un ordinateur, amènent celui-ci à exécuter le procédé selon l'une quelconque des revendications 1 à 11.

16. Support lisible par ordinateur (16), comprenant des instructions qui, lors de l'exécution par un ordinateur, amènent celui-ci à exécuter le procédé selon l'une quelconque des revendications 1 à 11.
